(19) Europäisches Patentamt
European Patent Office
Office européen des brevets

(11) EP 2 908 255 B1

(12) EUROPEAN PATENT SPECIFICATION

(45) Date of publication and mention
of the grant of the patent:
**25.07.2018 Bulletin 2018/30**

(51) Int Cl.:
***G06F 17/30*** *(2006.01)*

(21) Application number: **14290034.9**

(22) Date of filing: **13.02.2014**

(54) **Increasing search result validity**

Erhöhung der Suchergebnisgültigkeit

Augmenter la validité de résultat de recherche

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.08.2015 Bulletin 2015/34**

(73) Proprietor: **Amadeus S.A.S.
06410 Biot (FR)**

(72) Inventors:
• **Legrand, Guillaume
Waltham, MA 02453 (US)**
• **Robelin, Charles-Antoine
06600 Antibes (FR)**
• **Isnardy, Luc
06800 Cagnes sur mer (FR)**
• **Laburthe, Francois
06560 Valbonne (FR)**

(74) Representative: **Samson & Partner Patentanwälte
mbB
Widenmayerstraße 6
80538 München (DE)**

(56) References cited:
**EP-A1- 2 249 261          EP-A1- 2 541 473
WO-A1-2013/160721      WO-A1-2014/026753
US-B1- 7 562 027          US-B1- 8 423 538**

• **MICHAEL FRASCA ET AL: "Can models of
scientific software-hardware interactions be
predictive?", PROCEDIA COMPUTER SCIENCE,
vol. 4, 14 May 2011 (2011-05-14), pages 322-331,
XP028269543, ISSN: 1877-0509, DOI:
10.1016/J.PROCS.2011.04.034 [retrieved on
2011-05-14]**
• **Baldi ET AL: "Modeling the Internet and the Web:
Probabilistic Methods and Algorithms" In:
"Modeling the Internet and the Web: Probabilistic
Methods and Algorithms", 1 January 2003
(2003-01-01), Wiley, XP055028469, ISBN:
978-0-47-084906-4 \* Equations 6.14 and 6.17;
page 161 - page 167 \* \* page 167, line 5 - page 8 \***

## Description

FIELD OF THE INVENTION

The present invention generally relates to database technology. More specifically, the present invention is directed to a mechanism to increase validity or confidence of search results retrieved from a pool of pre-computed search results.

BACKGROUND

A common object in database technology is to ensure short response times to database queries which require processing large volumes of data. For example, such computing-power consuming processing has to be performed in response to so-called "open queries" which contain only little input information (e.g. only one or two parameters out of a dozen possible parameters are specified and/or the specified value ranges of the parameters are broad). Consequently, such open queries lead to a large number of results in general. Possibilities to speed up data processing by increasing hardware performance are limited. Thus, attention is drawn to improving the mechanisms underlying the processing of large data volumes.

One approach to shorten query times is to pre-compute or pre-collect expected results to queries and to maintain the corresponding query results in a pool of pre-computed or pre-collected results. Queries are then actually not processed on the large and distributed and/or complex-to-calculate data basis, but are directed to the pool. For example, this approach is employed by Internet search engines which utilize automated robots or crawlers to collect content of web servers and store this pre-collected content in a search engine repository. Internet search queries are then answered on the basis of the repository instead of retrieving the web servers' primary content at search query time.

A disadvantage of this approach is, however, that the pre-computed or pre-collected query results get outdated if the underlying primary data changes. In this case, the pool of pre-computed or pre-collected results returns incorrect results to the inquiring client.

One solution to remedy this issue is directed to improving the validity or correctness of the pre-computed or pre-collected query results by optimizing the re-computation or re-collection strategy, for example, by re-computing or re-collecting these query results with priority which are likely outdated. Such strategies are, for example, described by International patent application PCT/EP2013/002390, EP 2541473 A1 and US 2009/0234682 A1. However, a 100% all-time validity or correctness of the pre-computed or pre-collected query results is unachievable.

US 7,562,027 B1 discloses a travel planning system dealing with seat availability. In terms of hardware, the system is implemented by a computer system. In terms of software, the system includes a scheduling process and an availability process. The scheduling process provides a set of instances of transportation that satisfies a user query. The availability process accesses seat availability information from multiple information sources. The availability determines quality properties such as confidence, precision and/or validity of availability information retrieved from a first information source and determines whether the first information source is reliable. If the first information source is not reliable, the availability process executes a second set of seat availability queries to the first information source or a different information source to provide a second set of instances of transportation for which a seat is available. According to another embodiment of US 7,562,027 B1, some sources of availability data include measures of availability confidence of the results (e.g., "a seat of Q is available with 80% certainty"). This certainty information, if present, is passed to the client for processing and display for informative purposes to the user. The client can also be programmed to filter out seats and flights with less than a specified probability of being available.

WO 2013/160721 A1 describes a computation platform and a search platform. The computation platform receives batch re-computation orders from the search platform instructing the computation platform to compute database query results. The computation platform processes a batch re-computation order according to a batch processing schedule within a given time frame and returns the computed database query results. The search platform maintains the computed database query results in a memory and makes the computed database query results available to clients which are connected to the search platform. The decision which pre-computed search results to re-compute is based on a probabilistic model including factors such as volatility and popularity of the pre-computed search results.

SUMMARY OF THE INVENTION

It is an object of the present invention to increase the validity of search results which have been pre-collected or pre-computed and are returned to a client in response to a search query. Generally, the present invention takes a different approach than the strategies of increasing the validity of pre-computed or pre-collected search results by optimizing the re-computation or re-collection process which is performed asynchronous to the occurrence of search queries. Rather, the present invention proposes a mechanism to estimate the validity of pre-computed or pre-collected search results and to utilize this validity estimation in order to return pre-computed or pre-collected search results to the client which are probably valid.

According to the present invention, a method of handling queries in a database system is provided. The database system has at least one client and at least one search platform. The search platform maintains pre-computed search results which are associated which confidence factors. A confidence factor indicates a probability of the associated search result being valid. A query indicating at least one search criterion is received by the search platform. The search platform utilizes the confidence factors associated with the identified pre-computed search results to increase the mean probability of pre-computed search results of being valid returned to the client.

More specifically, the search platform utilizes the confidence factors associated with the identified pre-computed search results by returning only pre-computed search results which are associated with confidence factors having values exceeding a given threshold.

According to another aspect, a respective search platform for handling queries in a database system as described above is provided.

According to still another aspect, a database system including a search platform and a client for handling queries as described above is provided.

According to yet a further aspect, a non-transitory computer readable storage medium having computer program instructions stored therein, which, when executed on a computer system, perform the method as described above.

Further aspects are set forth in the dependent claims.

BRIEF DESCRIPTION OF THE FIGURES

The present invention will be described with reference to the accompanying figures. Similar reference numbers generally indicate identical or functionally similar elements.

Fig. 1 gives an overview of a system including at least one client and a server maintaining pre-computed search results.

Fig. 2 visualizes the effect of the likelihood decreasing over time that pre-computed search results kept in the server are valid.

Fig. 3 shows a search platform maintaining pre-computed search results and associated confidence factor values.

Fig. 4 shows a first example of the search platform internally utilizing a filter on the basis of the confidence factor threshold.

Fig. 5 is a message sequence chart relating to the example of Fig.4.

Fig. 6 illustrates a second example according to which the search platform employs a confidence factor threshold as an additional search criterion.

Fig. 7 depicts a message flow of the example of Fig. 6.

Fig. 8 explains a third example according to which the confidence factor threshold is employed to perform a further query in a primary data source in response to the server's query results.

Fig. 9 presents a message sequence of the example of Fig. 8.

Fig. 10 shows a fourth example according to which the search platform performs a further query to a primary data source.

Fig. 11 is a message sequence chart relating to the example of Fig. 10.

Fig. 12 shows a fifth example according to which the search platform first returns pre-computed search results to the client and performs re-validation subsequently.

Fig. 13 is a message sequence chart relating to the example of Fig. 12.

Fig. 14 depicts an exemplary architecture example of a distributed travel-related database environment.

Fig. 15 is an exemplary schematic view of the internal architecture of the search platform and/or the client.

DETAILED DESCRIPTION

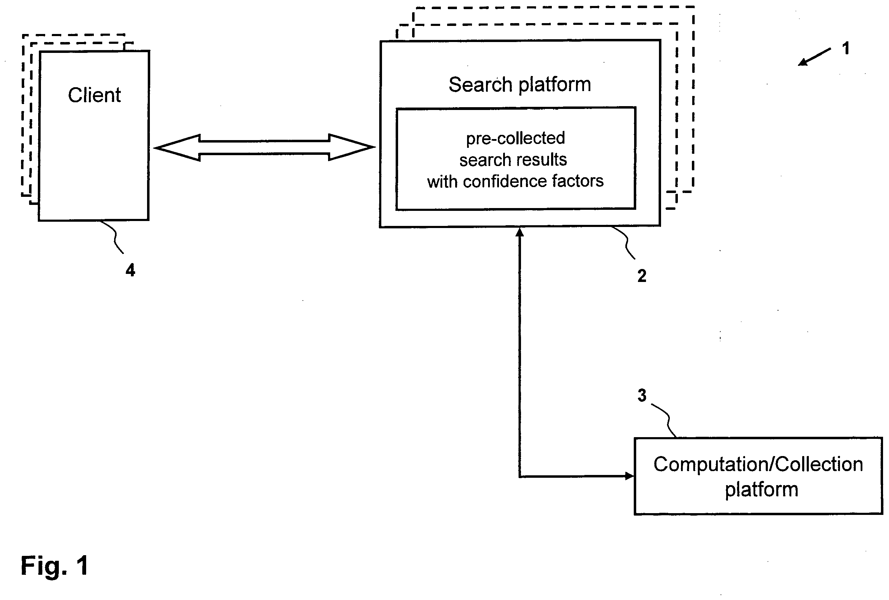

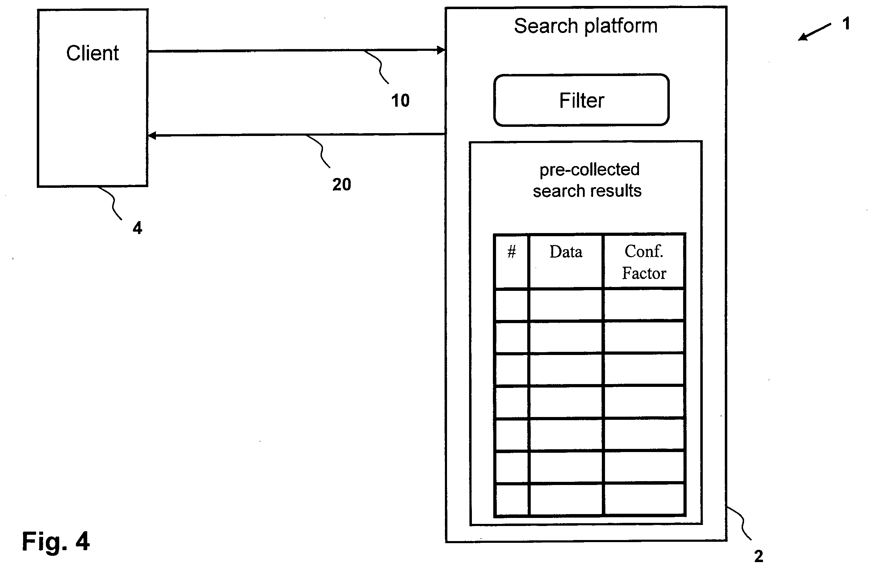

Before turning to the detailed description with reference to Figures 4 to 15, some general aspects will be set forth first on the basis of Figures 1 to 3.

The present invention generally relates to handling search queries in a database system maintaining pre-computed or pre-collected search results. An exemplary database system 1 is shown by Figure 1. The database system 1 includes at least one, but generally a plurality of clients 4 and at least one search platform 2. To increase failure safety or performance, a plurality of search platforms 2 may be present. The at least one search platform 2 maintains pre-computed or pre-collected search results in order to decrease response times to answer search queries received by the clients 4. Hereinafter, the term "pre-collected" is used to cover any sort of pre-collection and pre-computation such as simple Internet crawlers collecting or copying the content of Internet web servers, but also complex and time-intensive computations of search results on the basis of underlying data as it is e.g. described for priced travel recommendation by PCT/EP2013/002390 and EP 2541473 A1. The term "database" is meant to encompass any types of structured information storage system such as standard stand-alone databases like SQL server or Oracle databases as well as complex, distributed and/or proprietary storage systems, relational databases including database management systems or object-oriented database systems.

The client 4 directs search queries to the search platform 2 including one or more search criteria or parameters. For example, if a search query is an Internet search, the search query might carry a search string, search text or search phrase as search criteria. A further search criterion may be the language of websites to be searched or an indication of a point of time of the first availability of the requested search string, search text or search phrase. According to another example, the search query is a database request for a product or service offered by a service provider platform such as an Internet book store or a travel provider. In that case, the search query might include e.g. an upper price limit or a price range for the service or product and desired characteristics of the product/service such as book title, travel origin and destination, etc.

The search platform 2 processes a search query received from the client 4 and performs a database search within the pre-collected search results. In turn, search platform 2 responds with one or more pre-collected search results fulfilling the search criteria included in the search query. The client 4 receives this response and presents the search results to the user.

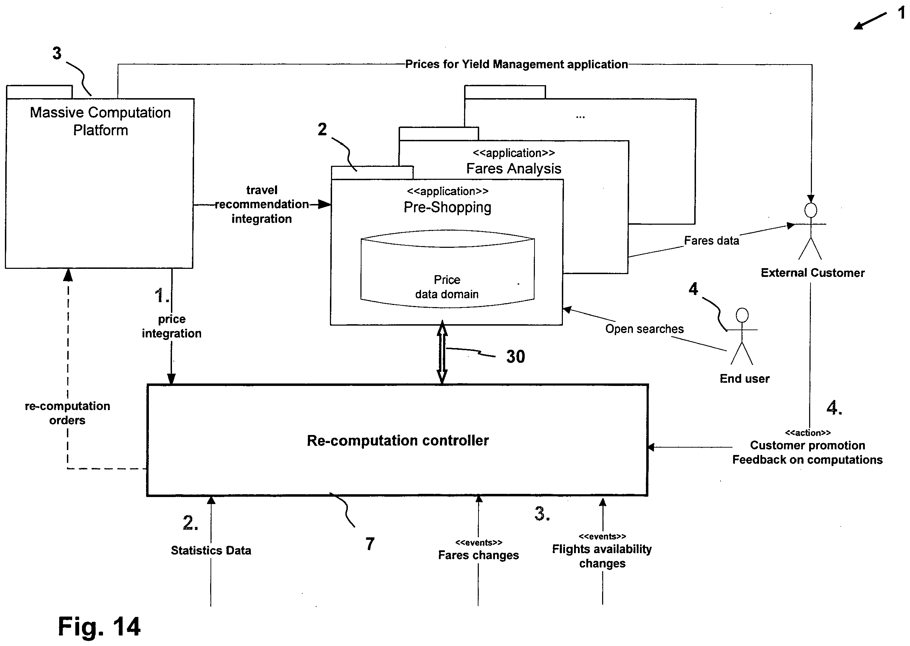

The pre-collection of search results is performed by using computation/collection platform 3. Generally, search platform 2 or another control entity (cf. Figure 14) employs an appropriate re-collection strategy in order to update the pre-collected search results stored by search platform 2. To this end, search platform 2 or the other control entity generates and transmits re-collection orders to computation/collection platform 3. Computation/collection platform 3 executes the re-computation or re-collection, e.g. by requesting original data corresponding to the pre-collected search results from primary data sources. For the purpose of the present invention any suitable re-collection strategy for updating the pre-collected search results may be employed, e.g. the update strategies as described by PCT/EP2013/002390 which is incorporated by reference herein.

The present invention does not focus on improving the validity or correctness of pre-collected search results returned to client 4 in response to search queries by a particular re-collection strategy. Rather, the invention focuses on improving the validity or correctness of pre-collected search results which are actually returned to the client 4 at the time of an incoming search query. In essence, it is proposed to return only such pre-collected search results to the client 4 which have a certain likelihood of being valid, while it is refrained from returning pre-collected search results to client 4 which have a certain likelihood of being invalid.

To this end, the pre-collected search results maintained by search platform 2 are associated with confidence factors. For example, each pre-collected search result stored by search platform 2 has a corresponding confidence factor. Alternatively, one confidence factor may be associated with a plurality of pre-collected search results. A confidence factor indicates a probability of the associated pre-collected search result(s) being valid. In general, confidence factors associated with pre-collected search results are utilized in order to decide which pre-collected search results are returned to the client 4 in response to a search query and which pre-collected search results are not returned to the client 4 and/or are returned to the client 4 in a specific way.

In order to make this decision, the present invention utilizes the confidence factors in order to generally provide the client 4 with pre-collected search results having a higher probability of being valid than pre-collected search results which would have been returned to the client without utilizing the confidence factors. The confidence factors may be utilized in different ways in order to provide the client 4 with potentially more valid pre-collected search results, as will be described below.

In some embodiments, a confidence threshold is employed. This confidence threshold is either prescribed by the client 4. For example, the client 4 includes a threshold value (such as "at least 85%" or "at least 0,9" or "high" being likewise defined as "at least 0,9") in the search query when requesting search results from the search platform 2. The client 4 may also send dedicated asynchronous messages indicating a desired confidence threshold to the search platform 2. Search platform 2 stores these client-specific confidence threshold prescriptions and employs them each time a search query is received from client 4. Alternatively, in other embodiments, the confidence threshold is set by a third party such as the operator of the search platform 2. In this case, a single confidence threshold value may be applicable for all search queries received from all clients 4. The clients 4 may not have an influence on the confidence threshold employed by the search platform 2. Alternatively, the confidence threshold pre-set by the third party may act as a default value and clients 4 may be able to override this default value by an own client-specific prescription.

Generally, in some embodiment, irrespective of the way the confidence factor is set and whether or not the confidence factor is client-specific, the client 4 is provided with search results which are associated with a confidence factor value exceeding the confidence threshold, wherein "exceeding" may also include the case that the confidence factor value equals the confidence threshold. In some embodiments, the client 4 is only provided with pre-collected search results exceeding the confidence threshold. In other embodiments, the client 4 may initially also provided with pre-collected search results below the confidence threshold, while the search platform performs a validation of these pre-collected search results below the threshold and updates the tentatively returned pre-collected search results below the threshold with the corresponding validated search results. These mechanisms have the effect that pre-collected search results at the search platform 2 which have a higher likelihood of being invalid are either not returned at all to the client or updated with search results having a higher likelihood of being valid, thereby increasing the accuracy of the search results for the clients 4 while still maintaining the advantage of short response times due to the pre-collection of search results. Particular examples of arrangements for the client's provision with pre-collected search results exceeding the confidence threshold are given further below with reference to Figures 4 to 13.

This solution substantially differs from US 7,562,027 B1 which, on the one hand, classifies different data sources with different levels of confidence or reliability. On the one hand, the confidence measures of US 7,562,027 B1 ("a seat in Q is available with 80% certainty") is not a confidence factor in the sense of the present invention because the confidence measures of US 7,562,027 B1 do not indicate an estimation of the validity of pre-collected search results (i.e. the likely that the pre-collected search results still correspond to the original search results), but an estimation of the actual seat availability. Thus, the confidence measures of US 7,562,027 B1 are part of the user data, while the present confidence factors are control data e.g. maintained on a probabilistic model. As far as US 7,562,027 B1 describes these kinds of measures of confidence included in search results, these information are simply passed on the client and potentially displayed to the user which, as such, does not result in a client's provision with search results having a higher probability of being valid as achieved by the mechanisms disclosed herein. To increase the potential validity of search results displayed to the user, US 7,562,027 B1 proposes to filter out potentially invalid search results only at the client side, while the present invention advantageously utilizes the confidence factors downstream the client 4.

The function of the confidence factor to indicate a validity probability of pre-collected search results according to the present invention is exemplarily implemented by a probabilistic model utilizing the following parameters:

The age $t_i$ of a pre-collected search result refers to the time passed since the last re-computation or re-collected of this pre-collected search result by the computation/collection platform 3. The validity rate $\lambda_i$ of the pre-collected search result i is a measure of how long the pre-collected search result i remains valid or how fast the pre-collected search result i becomes invalid due to changes of the underlying original data. This validity rate of a given pre-computed search result i is, for example, statistically derived from the occurrence and the outcomes of past (re-)computations or (re-)collections and comparisons of the re-collected search result with its previous state or values. For example, it has been determined that a particular pre-collected search result i has a validity rate $\lambda_i$ of 10% per hour meaning that the probability of i being valid decreases by 10% every hour. At the time of its (re-)collection or (re-)computation, i is generally 100% valid. After one hour, i is valid with a probability of 90%. After two hours the validity of i is 81% (=90% decreased by another 10%). After three hours, i's probable validity is at 72.9%, and so on.

The validity rate $\lambda_i$ may be employed to provide an estimate of the probability P for a pre-collected search result to stay valid after a given time: ***P(unchanged after t) = e^{-\lambda_i t}***.

This is also referred to as the probability the expected accuracy $\boldsymbol{acc_i^t = e^{-\lambda_i t}}$ or, more general, as the probability of a pre-collected search result being still valid.

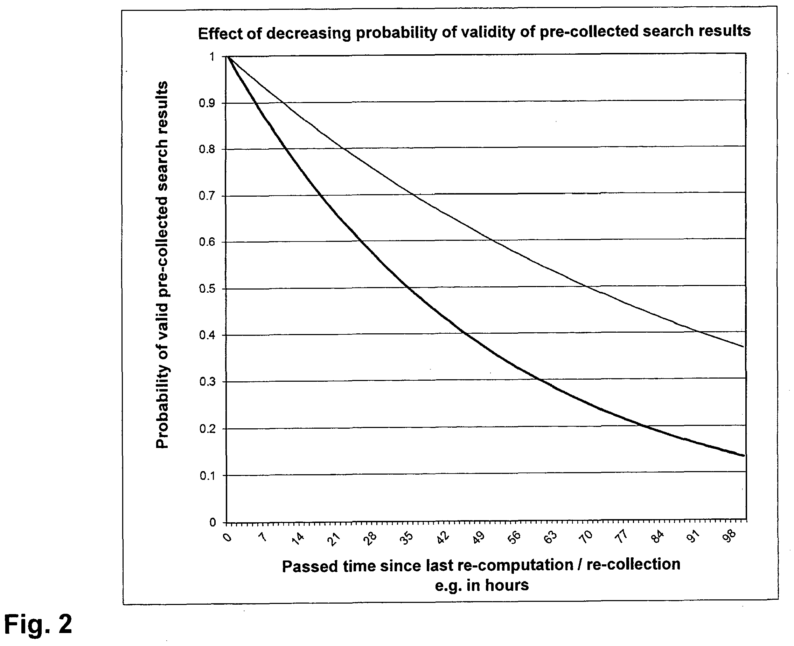

Two exemplary functions of this probable validity or accuracy decreasing over time are depicted by Figure 2. The upper function represents a pre-collected search result which potentially remains more accurate (or, more correctly, stays at a higher probability of being valid over time) than another pre-computed search result associated with the lower function. For example, the pre-computed search result represented by the upper function has 70% probability of being still valid at 35 hours after its last re-collection, while the other pre-computed search result characterized by the lower function is only valid up to about 50% at 35 hours after its latest re-collection. Both functions may also represent whole sets of pre-collected search results and accordingly indicate proportions of the sets of pre-collected search results likely being valid at a time passed since the last re-collection of the set.

In some embodiments, the confidence factor values are derived from such probabilistic model modelling the validity of pre-collected search results over time. More specifically, in some embodiments, the probability of a pre-collected search result i being valid at a time t after a previous collection of the pre-collected search result i is given by $e^{-\lambda_i t_i}$. As outlined before, $\lambda_i$ denotes a rate of the pre-collected search result i becoming invalid.

In some embodiments, the confidence factors $e^{-\lambda_i t_i}$ associated with the pre-collected search results are maintained by the search platform 2 (or another entity) in form of stored values of the pre-collected search results' validity rate $\lambda$ and the timestamps TS of the last re-collected or re-computation of the pre-collected search results. Thus, for a particular pre-collected search result i, search platform 2 stores the validity rate $\lambda_i$ and the timestamp $TS_i$. These values are not changing over time, but are constant until the next re-collection of i. At search time, i.e. when a search query is received by search platform 2, the confidence factor value of pre-collected search result i $e^{-\lambda_i t_i}$ is calculated from by using $\lambda_i$ and $TS_i$, wherein t in $e^{-\lambda_i t_i}$ results from $TS_s - TS_i$, $TS_s$ referring to the time of the search query's arrival at search platform 2. Thus, in these embodiments, the confidence factor is associated with the pre-collected search results by having the values of $\lambda$ and TS stored for each pre-collected search result (or sets of pre-collected search results).

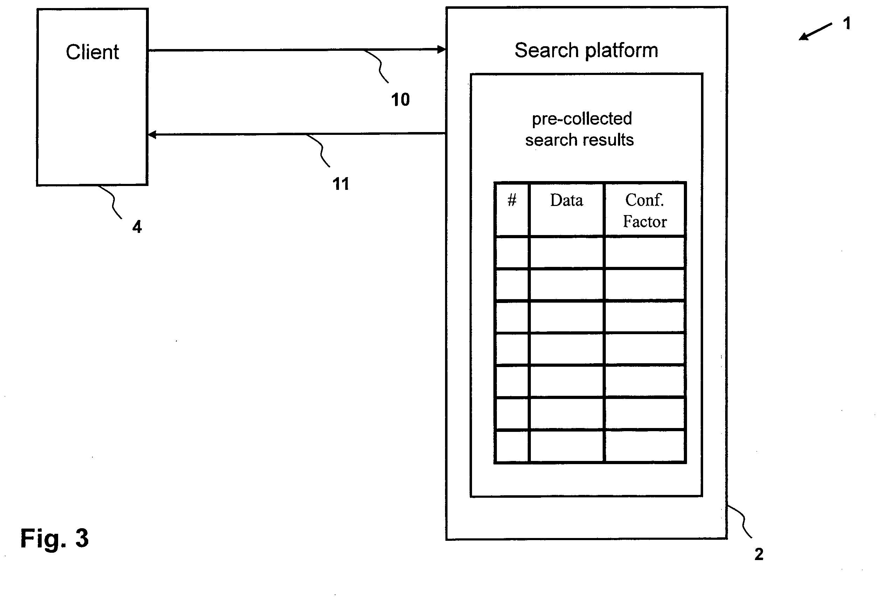

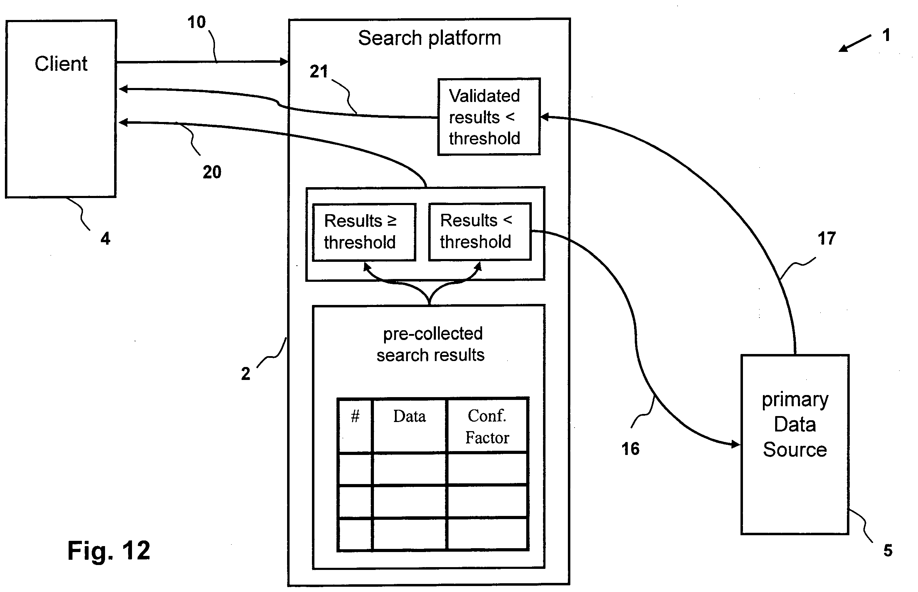

A basic setting of client 4 and search platform 2 is shown by Figure 3. Search platform 2 runs a database with pre-collected search results. As shown by Figure 3, the pre-collected search results include e.g. an index (visualized by "#" in Figure 3), the search result data (indicated by "Data" in Figure 3) including e.g. data fields which are defined as primary key values and secondary secondary key values as well as confidence factor values (referred to as "Conf. Factor" in Figure 3). As outlined before, in some embodiments, the confidence factor values are stored in the database in form of the values λ and TS being associated with each of the pre-collected search result. Client 4 directs a search query 10 to search platform 2. Search platform 2 processes the search query 10 and performs a search in the database in order to determine pre-collected search results fulfilling search criteria transmitted with the search query. Search platform 2 generally returns pre-collected search results by message 11 which meet the confidence threshold. In other embodiments, the confidence factors being associated with the pre-collected search results stored by the search platform 2 are not stored in the same database tables, partition or in the same database as the pre-collected search results, but are maintained in a separate database or station and retrieved from there by the search platform 2 at the time of processing a search query (cf. also Figure 12 discussed further below).

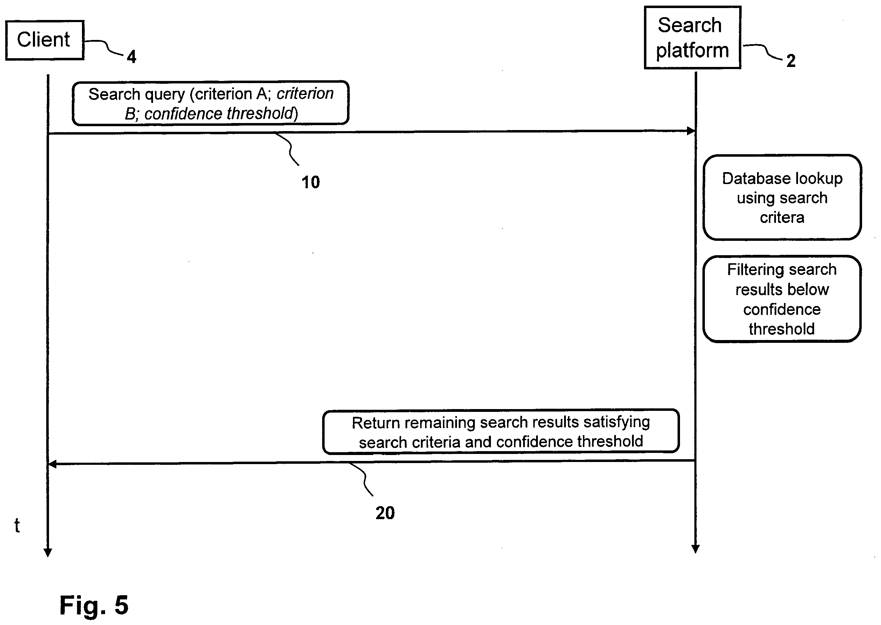

Now referring to the more detailed description of exemplary implementations of the mechanisms described in a more general manner above, Figures 4 and 5 illustrate a first example according to which search platform 2 ensures that client 4 receives only search results fulfilling the confidence threshold by filtering out pre-collected search results with confidence factor values below the confidence threshold. As previously described with reference to Figure 3, the client 4 generates and transmits a search query 10 to search platform 2. Search query 10 includes one or more search criteria such as a search string for an Internet search. Search platform 2 performs a database lookup in the database of pre-collected search results and retrieves pre-collected search results fulfilling the at least one search criterion passed over with the search query 10. As a sort of post-processing activity, the search platform 2 then filters out those pre-collected search results from the set of pre-collected search results resulting from the database lookup which do not meet the confidence threshold, i.e. which have confidence factor values below the confidence threshold. These filtered pre-collected search results are not returned to the client 4. Rather, the search platform 2 only returns these pre-collected search results uncovered by the database lookup which have confidence factor values at or above the confidence threshold. These results are returned to the client 4 by message 20 (Figure 4).

Figure 5 is a message sequence chart visualizing the message flow of this first implementation example. As indicated by Figure 5, the search query includes one or more search criteria, for example, in the exemplary case of a travel-related query, parameters for the travel the user is interested in such as an origin and destination pair and a timeframe for the travel (Figure 5: "criterion A", optional "*criterion B*"). Optionally, search query 10 also includes a values for the confidence threshold (Figure 5: "*confidence threshold*"). Alternatively, search platform 10 utilizes a predetermined confidence threshold in an autonomous manner, i.e. without receiving a confidence threshold in the search query 10. For example, search platform 2 is provided with a default value for the confidence threshold prior to receiving the search query 10.

Search platform 2 then performs the database lookup in its pool of pre-collected search results on the basis of the one or more search criteria which were received as content of the search query 10. Subsequently, search platform 2 filters out these search results with confidence factor values below the confidence threshold and returns, by message 20, only those pre-collected search results with confidence factor values at or above the confidence threshold.

As an advantage of this implementation example, client 4 is provided with search results in a similar fast manner than a normal query to search platform 2 without a utilization of the confidence factor as presented herein. On the other hand, the filter activity by search platform 2 may result in "holes" in the set of pre-collected search results produced by the search platform's database lookup. Depending on the value of the confidence threshold and the values of confidence factors of the retrieved pre-collected search results, a substantial part of potential search results the user is interested in may be missed due to the filter activity and not returned to client 4. This may nevertheless be acceptable for particular applications, for example, the retrieval of advertisement banners which are of potential interest to the user on web pages.

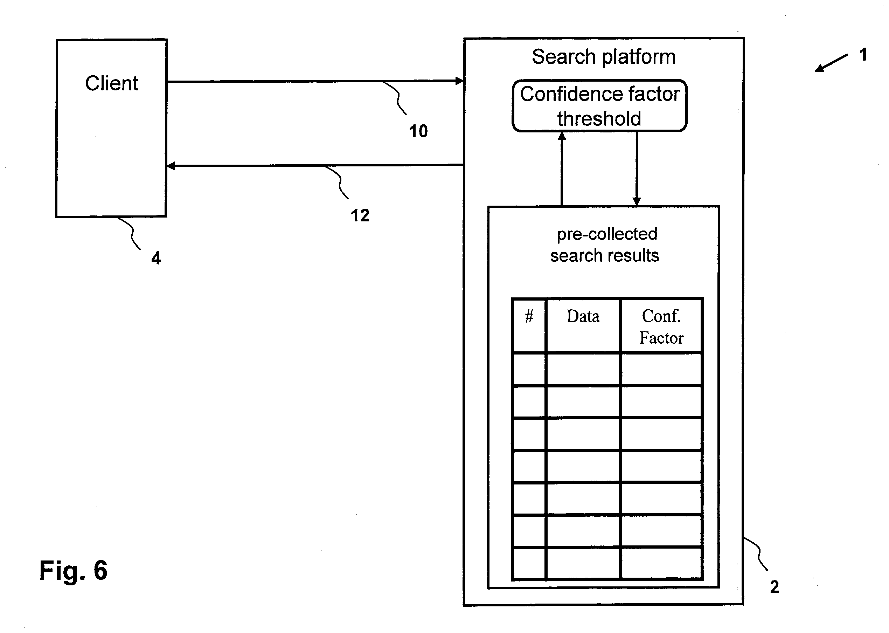

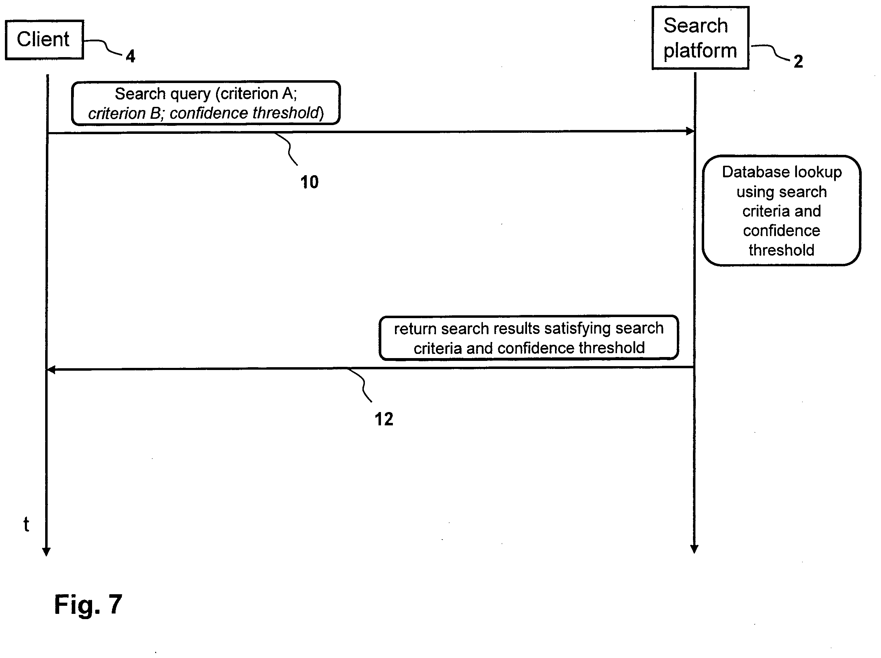

According to a second example, the search platform 2 utilizes the confidence threshold as an additional search criterion (Figures 6 and 7). Basically, in this second example, search platform 2 utilizes the confidence threshold as a search criterion in addition to the at least one search criterion included in the search query 10. Figure 6 visualizes the interaction between client 4 and search platform 2, while Figure 7 shows the message sequence between both entities.

Client 4 generates and transmits search query 10 to the search platform 2 in a similar manner as described in the first implementation example before.

After the search platform 2 has received the search query 10, the search platform 2 performs a lookup in its database of pre-collected search results. On the one hand, this database lookup is based on the at least one search criterion included in the search query 10 as in the first implementation example. On the other hand, however, the database lookup is also based on the confidence threshold which is either prescribed by the client (e.g. by being included in the search query 10) or is available internally in the search platform 2. In essence, the confidence threshold functions as an additional search criterion, i.e. the database lookup only retrieves such pre-collected search results which have associated confidence factors with values being at or above the confidence threshold. Other pre-collected search results which fulfil the at least one search criterion included in the search query 10, but not the confidence threshold, are not returned by the database lookup. The pre-collected search results uncovered by the database lookup are returned by the search platform 2 to the client with message 12 (cf. Figures 4 and 5).

This second example of utilizing the confidence threshold as an additional search criterion has the effect that "holes" in the set of resulting pre-collected search results as they may occur in the first example described above with reference to Figures 4 and 5 can be avoided. For example, the search query 10 is directed to find the cheapest flights from Munich to Paris within a three day time interval. The search platform 10 may generally operate in a manner that for each of the three days, the five cheapest flights stored as pre-collected data records are returned to the client 4. It may be the case that all of the five cheapest flights e.g. on the third day have a confidence factor value below the confidence threshold with the effect that they are not returned to the client 4 by the first example according to which the search platform 2 is arranged to filter out these pre-collected search results not fulfilling the confidence threshold. If, however, the confidence threshold is used as an additional search criterion, the search platform 2 determines the five cheapest flights on the third day which also fulfil the confidence threshold. Thus, client 4 is provided with search results for all three days satisfying the given confidence requirements.

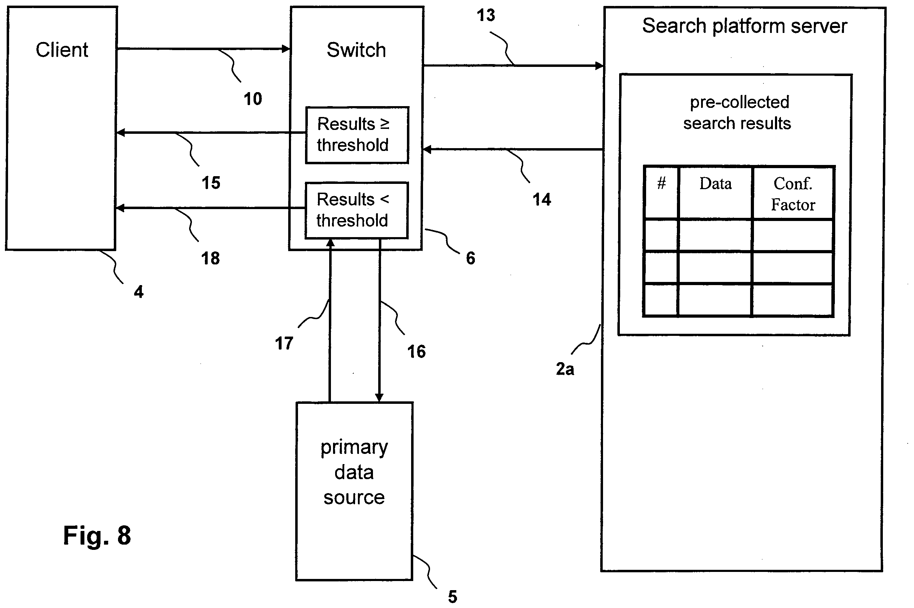

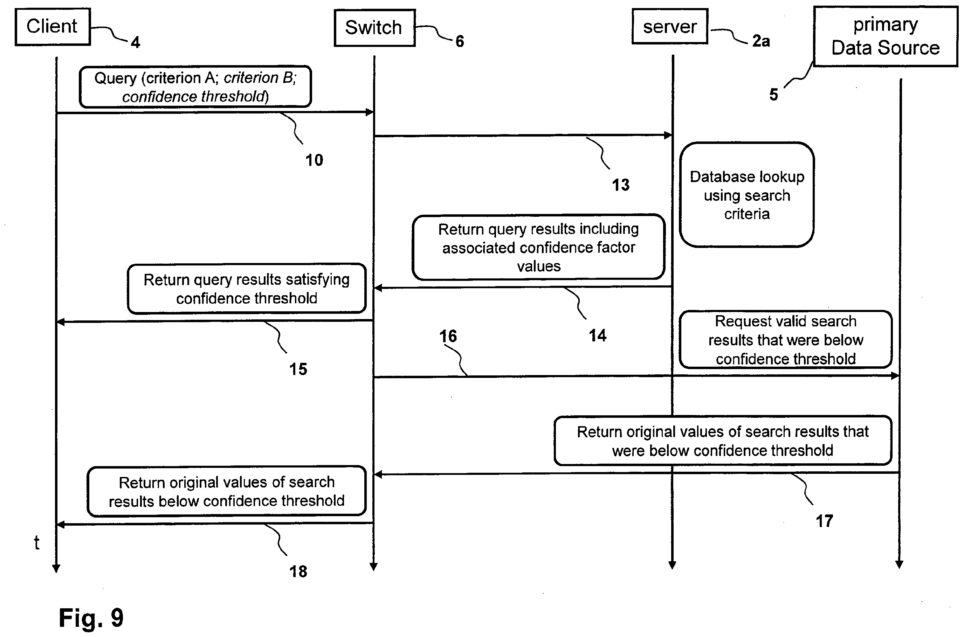

Figures 8 and 9 present a third example according to which client 4 only receives search results satisfying the confidence threshold. According to this third example, search platform 2 includes a search platform server 2a as well as an entity located upstream the search platform server 2a, i.e. an intermediate element between the client 4 and the server 2a. This entity is herein referred to as switch 6. The client 4 directs its search query to server 2a. However, the search query is transmitted via switch 6 to the server 2a. More specifically, switch 6 receives search query 10 from client 4 and relays search query 10 to server 2a in form of message 13.

The server 2a then performs a database search on the basis of the stored pre-collected search results in accordance with the search criteria included in the search query 10. The server 2a then, by message 14, returns pre-collected search results fulfilling the search criteria together with the confidence factor values associated with these pre-collected search results. It is noted that the database search conducted by the server 2a is not limited to any pre-collected search results being associated with a certain confidence factor threshold. Rather, the server 2a returns pre-collected search results to the switch 6 irrespective of their associated confidence factor values.

It is then a function of switch 6 (forming a logical part of the search platform 2) to utilize the confidence factor threshold. As outlined above, the threshold may either be set by the client e.g. by including a threshold value in the search query 10 (or into any other message transmitted asynchronously to search query 10) or, alternatively, be autonomously set by switch 6, e.g. by utilizing a given default value. The switch 6 evaluates the confidence factor values of the pre-collected search results received from the server 2a by message 14. Pre-collected search results being associated with confidence factor values at or above the threshold are forwarded unchanged to the client 4 by message 15. Pre-collected search results having confidence factor values below the threshold are not forwarded to the client 4. Rather, the switch initiates a secondary database search at a primary data source 5 by messages 16 and 17. The primary data source may maintain original data which is not pre-collected. This secondary database search thus validates the pre-collected search results received from the server 2a with confidence factor values below the threshold. The validated search results received by switch 6 from the primary data source 5 with message 17 are thus 100% valid.

The switch 6 then returns the search results to the client 4 by messages 15 and 18. Note that message 15 may either by sent to the client 4 immediately after the respective pre-collected search results received by switch 6 from server 2 with message 14 have been recognized to be associated with confidence factor values at or above the threshold, while message 18 are only sent after the secondary database search with the primary data source 5 has been performed. Thus, in this setting, messages 15 and 18 are sent separately at different points of time. In another setting, message 15 may be held back by switch 6 until the validated search results have been received from the primary data source 5 with message 17. In this case, messages 15 and 18 are sent at the substantially same point of time. They may also be sent as a single combined message.

It is also possible to subdivide messages 15 and 18 into smaller messages, for example atomic messages each conveying a single search result. In this way, switch 6 is able to provide the client 4 with pre-collected search results having confidence factor values above the threshold and/or search results validated with the primary data source 5 in an incremental manner. Accordingly, client 4 might be arranged to display incrementally arriving search results in an incremental manner to the user.

Optionally, the validated search results may not only be forwarded to client 4, but also to server 2a for including the validated search results in the database of the server 2a. In this manner, the revalidation of the pre-collected search results below the confidence threshold are leveraged for future search queries as they may not require re-validation, but may have confidence factor values above the threshold and, thus, may be returned to client 4 without re-validation.

The switch 6 and server 2a forming the search platform 2 may be implemented as an integrated entity or as separate elements or modules. For example, switch 6 may be implemented as a software module with the same hardware station of server 2a. In some embodiments, switch 6 is implemented by separate hardware. In this case, switch 6 may serve more than one server 2a and may therefore operate as a unified interface for a plurality of servers 2a.

A chronological message sequence and activities by the various entities is visualized by Figure 9. The process starts with search query 10 issued by client 4. The search query 10 includes at least one search criterion ("criterion A"). Generally, search query 10 will contain more than one search criterion, as indicated by italic "*criterion B*". For example, if search query 10 is a travel-related request such as a request for flight connections directed to server 4 being a travel recommendation search platform, search 10 might include e.g. the four search criteria or search parameters origin city (e.g. Nice), destination city (e.g. New York), outbound date (e.g. 27 December 2013) and return date (e.g. 6 January 2014). Optionally, search query 10 includes a value for the confidence threshold which switch 6 is going to apply.

Switch 6 receives the search query 10 and relays search query 10 to server 2a by message 13. In response to receiving message 13 server 2a performs a database lookup in the pool of pre-collected search results by using the search criteria included in search query 10 and message 13. By message 14, server 10 returns the retrieved pre-collected search results fulfilling the search criteria. These pre-collected search results include the associated confidence factor values.

Switch 6 receives the pre-collected search results with message 14 from server 2a and analyses the associated confidence factor values and compares the associated confidence factor values with the confidence threshold. Switch 6 forwards pre-collected search results with confidence factor values at or above the confidence threshold to the client 4 by return message 15. On the other hand, switch 6 requests validation of pre-collected search results having confidence factor values below the confidence threshold with primary data source 5. To this end, switch 6 sends request message 16 to primary data source 5. Request message 16 might contain the primary key values of the pre-collected search results to be validated in order to specifically request the pre-collected search results to be validated from the primary data source 5. Primary data source 5 looks up the request search results and returns the original and therefore valid search results to switch 6 with message 17. Finally, switch 6 forwards the validated search results to client 4 by message 18.

Note that the primary data source 5 may actually include more than one data source, e.g. a plurality of databases, web server, computation platforms, etc. Thus, messages 16 and 17 may be decomposed into several sub-messages which are sent to the plurality of primary data sources. Messages 16 and 17 may also formed by a plurality of sub-messages if the primary data source 5 is a single data source, e.g. in order to realize an incremental validation as explained next.

Optionally, in some embodiments, the switch 6 is additionally arranged to control the validation of the pre-collected search results below the confidence threshold in a more sophisticated manner. For example, switch 6 request validation of only a subset of the pre-collected search results below the confidence threshold, while other pre-collected search results below the confidence threshold are not validated (and are, in this example, not forwarded to the client 4 - in other examples, pre-collected search results with confidence factor values below the confidence threshold may also be forwarded to the client 4 although they have not been part of the validated subset). The subset is, for example, be formed by an available time for validation. Thus, for example, switch 6 performs the validation in an incremental way (e.g. a single request message 16 is decomposed into a plurality of validation requests which are serially sent to the primary data source 5 for every pre-collected search result to be validated) and stops sending requests 16 to the primary data source 5 after a given period of time. In some embodiments, this incremental validation is performed in an ordered manner, e.g. starting with the pre-collected search result(s) having the lowest confidence factor value and continuing with pre-collected search results(s) having greater confidence factor values. In this way, the validation controlled by switch 6 times out. In other embodiments, switch 6 indicates the time available for validation to the primary data source 5 and it is the primary data source 5 which stops the validation activity after the time is elapsed. The subset is, additionally or alternatively, be formed by a limit of the number of pre-collected search results to be requested from the primary data source 5 or by computation resources available at the primary data source 5. For example, switch 6 may be arranged to decide to only validate a given number of pre-collected search results (for example, 20 pre-collected search results) and request validation of that given number from the primary data source 5 while pre-collected search results below the threshold excessing the given number may be discarded by the switch 6 or, in other embodiments, may be forwarded to the client 4.

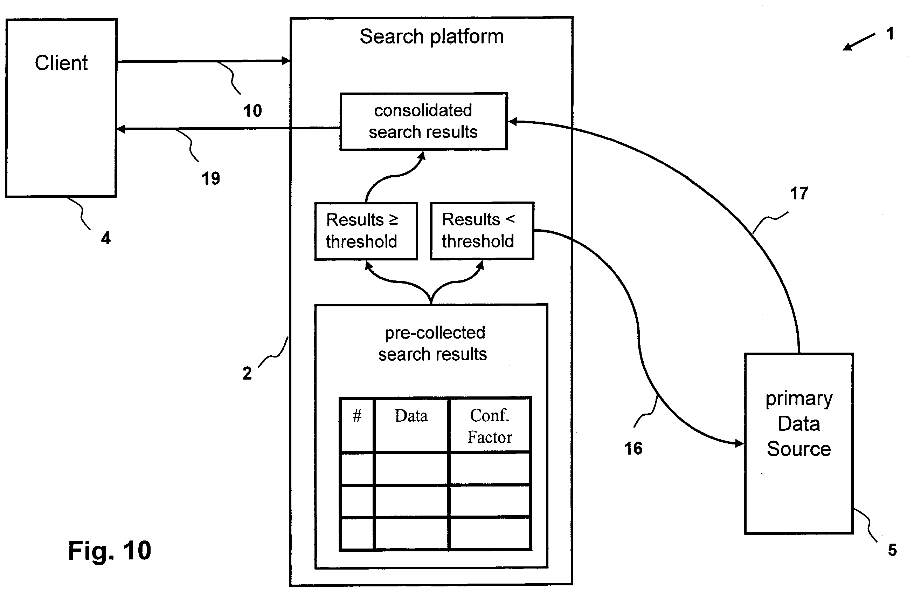

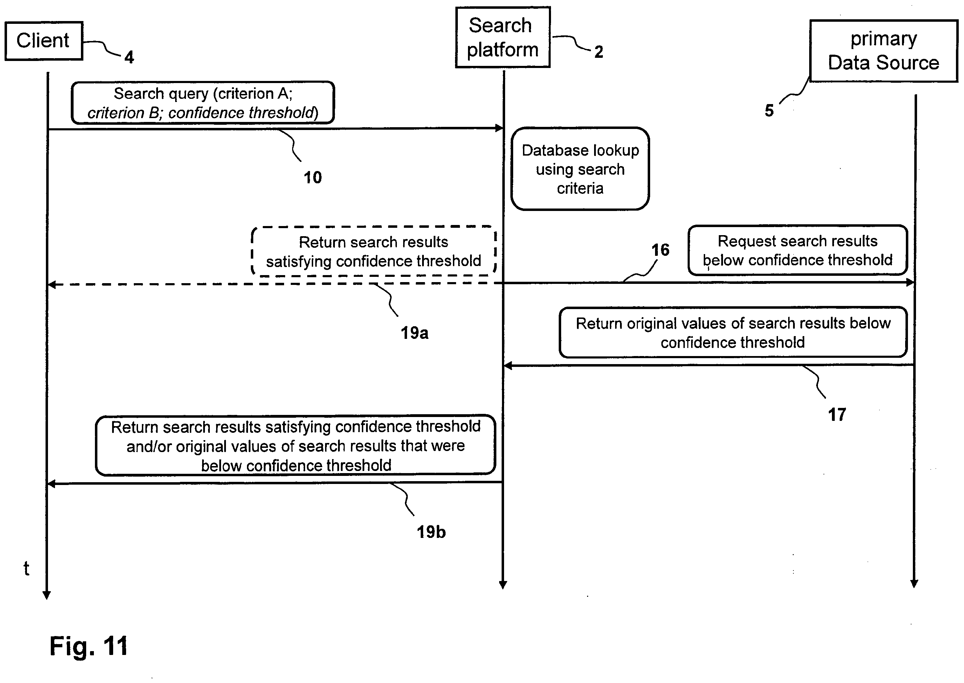

A fourth example is given by Figures 10 and 11. This fourth example is more general than the third example of Figure 8 and 9 in that it is the search platform 2 which performs the revalidation of pre-collected search results with confidence factor values below the confidence threshold with the primary data source 5. Apart from that, the same principles as explained in the third example apply to the third example.

Similar to the third example, search platform 2 receives a search query 10 from client 4 (Figures 10 and 11). Search platform 2 then performs a search in the database of pre-collected search results for search results corresponding to the search criteria included in the search query 10. Pre-collected search results having confidence factor values below the threshold are re-validated by search platform 2 with primary data source 5 by message 16. The search platform receives the validated search results from primary data source 5 with message 17 and, for example, consolidates the re-validated search results received from primary data source 5 with the pre-collected search results having confidence factors at or above the confidence threshold. Search platform 2 then transmits the consolidated search results to client 4 by message 19.

As described above for the third example, message 19 might be a single message including all search results to be returned to client 4 or message 19 might be split up into several messages, e.g. into messages 19a (Figure 11) carrying the pre-collected search results at or above the confidence threshold (as they are available earlier than the re-validated pre-collected search results below the threshold) and further messages 19b (Figure 11) carrying the search results re-validated with primary data source 5 (as they are available only at a later point of time).

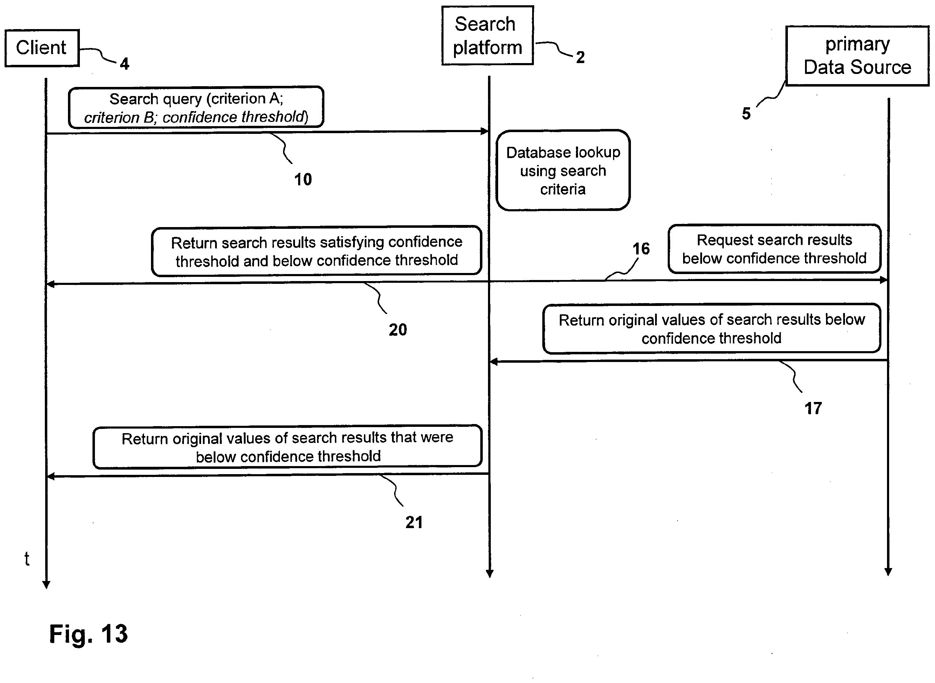

A fifth example is given by Figures 12 and 13. The fifth example is a further variation of the third and fourth example. According to this fifth example, the search platform 2 first returns the pre-collected search results complying with the at least one search criteria included in the search query 10 and only validates these pre-collected search results below the confidence threshold in parallel and/or subsequently. The search platform 2 then returns the validated search results to the client 4, thereby updating the initially returned pre-collected search results below the confidence threshold with the corresponding validated search results and, thus, increasing the probability of these search results being valid.

Hence, similar to the third example and to the fourth example, search platform 2 receives a search query 10 from client 4 (Figures 12 and 13). Search platform 2 then performs a search in the database of pre-collected search results for search results corresponding to the search criteria included in the search query 10. Search platform 2 then returns all pre-collected search results, irrespective the pre-collected search results' confidence factor values (below, at, or above the threshold) to the client 4 by message 20 (again, message 20 may include one or more individual sub-messages). The pre-collected search results below the confidence threshold are, however, re-validated by search platform 2 with primary data source 5 by message 16 in a similar manner as in the third example or in the fourth example. The search platform 2 receives the validated search results from primary data source 5 with message 17. Search platform 2 then transmits the validated search results to client 4 by message 21. Client 4 processes the validated search results and updates the corresponding pre-collected search results below the confidence threshold initially received from the search platform 2 with the validated search results (e.g. by overwriting the pre-collected search results below the confidence threshold initially received from the search platform 2 with the validated search results and displaying the updated search results to the user).

The validation processes formed by messages 16, 17 and 21 may occur incrementally and in parallel or subsequently to returning the initial pre-collected search results by message 20. To this end, messages 16, 17 and 21 may be subdivided into a plurality of sub-messages as already explained above with reference to Figures 8 and 9. In addition, a validation control as also described with reference to Figure 8 and 9 may be employed, e.g. the validation process of messages 16, 17 and 21 may be capped to a given amount of validation time or computation / collection resources. Furthermore, the validation control may employ an ordered validation process, e.g. by validating the pre-collected search results below the confidence threshold in ascending order in terms of the confidence values of the pre-collected search results.

Figure 14 shows an application example of the database system 1. This application example relates to a database system used in the travel industry. More specifically, in this embodiment, the computation platform 3 maintains data on air travel offers. A plurality of search platforms 2 store prices related to these air travel offers which the computation platform 3 calculates on the basis of calculation rules, in particular flight fares and their associated calculation rules. In the example of Figure 14, the computation platform 3 may be a Massive Computation Platform (MCP) as disclosed by EP 2521074 A1. The search platforms 2 and the MCP 3 are coupled via communication links which are utilized to transmit pre-computed priced travel recommendations from the MCP 3 to the search platforms 2.

Furthermore, the database system 1 includes a re-computation controller 7 which is responsible for monitoring the validity of the pre-computed priced travel recommendations stored in the search platforms 2 and for deciding which pre-computed priced travel recommendations are to be re-computed by MCP 3. In the example of Figure 14, the re-computation controller 7 employs a probabilistic model for tracking the validity probabilities of the pre-computed priced travel recommendations stored in the search platforms 2. The probabilistic model may be based on the parameters as described above with reference to Figure 3. To this end, re-computation controller is equipped with several communication interfaces in order to input statistical data for estimating change rates of travel recommendations as well as to recognize external events such as fare changes, customer promotions and flight availability changes. In the example of Figure 14, the confidence factor values of the pre-computed priced travel recommendations are maintained centrally by the re-computation controller 7 for all search platforms 2. In the course of processing search queries from clients 4, search platform 2 request confidence factor values associated with the pre-computed priced travel recommendations fulfilling the search criteria included in the search queries from re-computation controller 7 via interface 30. In response to this request, re-computation controller 7 performs the appropriate processing (for example, calculates $e^{-\lambda_i t_i}$ for each requested pre-collected search result on the basis of the respective values of the validity rate $\lambda$, the timestamp TS and $TS_s$) and returns the requested confidence factor values to the search platform 2. Alternatively, each search platform 2 may maintain the confidence factor values associated with the stored pre-computed priced travel recommendations, for example as shown by Figure 3 and described above. In this case, the search platform 2 either are equipped with the aforementioned communication interfaces in order to maintain the probabilistic model by themselves. In other embodiments, the confidence factor values stored in the search platforms 2 may also be updated by the re-computation controller 7 e.g. on a periodic basis.

As also indicated by Figure 14, the search platforms 2 may implement various applications. For example, a pre-shopping application serves as an unbinding information platform by which the clients 4 can obtain information about flight routes, flight schedules and prices, hotel room availability, rental car services, etc. without having to make an actual reservation. Another application may be an advertisement banner application which provides data for travel advertisement banner to Internet websites being subscribed to such banner advertisement. Whenever a client 4 retrieves an Internet website hosting advertisement banners, the banner content is dynamically loaded from a banner application search platform 2 in response to banner search queries automatically generated by client 4. The dynamically loaded banner content may depend on interests of the user determined e.g. by cookies or browsing history data of client 4. For this application, the first example of filtering pre-collected search results as described with reference to Figure 4 and 5 may be suitable because it may not be necessary avoid holes in the priced travel advertisements. Rather, short response times of the advertisement banner may be more important.

As another additional optional functionality, the confidence factor associated with the pre-collected search results that are actually returned to the client 4 may be transmitted to client 4 along with the actual search results. In the case of re-validated search results returned to the client 4 (third, fourth and fifth examples, Figures 8 to 13), confidence factor values of 100% may be returned to client 4. Client 4 may be arranged to process the confidence factor values (which are all at or above the confidence threshold), for example, to indicate the varying confidence of the various search results to the user. This indication may, for example, be realized by the client 4 by grouping the received search results into classes of different confidence intervals, e.g. search results with a confidence factor value of 100% (i.e. the re-validated search results), search results with a confidence factor between 95% and 100% and further search results with a confidence factor below 95%, but still above the confidence threshold.

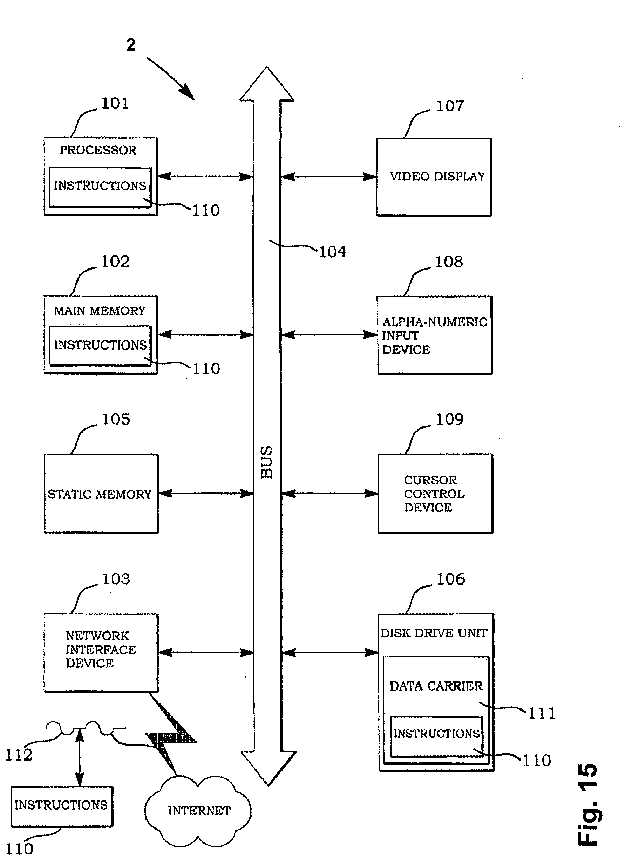

Finally, Fig. 15 is a diagrammatic representation of a computer system which provides the functionality of the search platform 2. Within the search platform 2 a set of instructions, to cause the computer system to perform any of the methods performed by the search platform as discussed herein, may be executed. The search platform 2 includes a processor 101, a main memory 102 and a network interface device 103, which communicate with each other via a bus 104. Optionally, the search platform 2 may further include a static memory 105 and a disk-drive unit 106. A video display 107, an alpha-numeric input device 108 and a cursor control device 109 may form a distribution list navigator user interface. The network interface device 103 is wired and/or wireless interface which connects the data search platform 2 to the computation/collection platform 3, the sources of statistical data needed to fill up the probabilistic model such as a statistics search platform, the Internet and/or any other network. The network interface device 103 utilizes either standard communication protocols such as the HTTP/TCP/IP protocol stack, IEEE 802.11 and/or proprietary communication protocols. A set of instructions (i.e. software) 110 embodying any one, or all, of the methodologies described above, resides completely, or at least partially, in or on a machine-readable medium, e.g. the main memory 102 and/or the processor 101. Among others, the instructions may implement the search platform's capabilities to process incoming search queries 10, to perform database lookups among the pre-collected search results and to generate and transmit messages like response messages 11, 12, 14 and 20 as well as request message 17. A machine-readable medium on which the software 110 resides may also be a non-volatile data carrier 111 (e.g. a non-removable magnetic hard disk or an optical or magnetic removable disk) which is part of disk drive unit 106. The software 110 may further be transmitted or received as a propagated signal 112 via the Internet through the network interface device 103.

Client 4 may reside in a stationary computer or a mobile device such as a smartphone, a cell phone, a laptop, a tablet computer or the like which may be of a similar structure as shown by Figure 15. Accordingly, the instructions 110 embodied in the processor/memory implement the client's functionality to generate and transmit search query 10 and receive, process response messages 11, 12, 14, 19 and 20 and display the search results received from search platform 2 and/or switch 6.

As described above, switch 6 may be included in the search platform 2 or may be provided as a separate hardware entity. In the latter case, switch 6 may also be of similar structure as shown by Figure 15.

The present approach of utilizing confidence factor values associated with pre-collected search results and confidence thresholds allow increasing the reliability of pre-collected/pre-computed search results provided to clients at search time. It can be advantageously combined with an improved strategy of re-computing/re-collecting the pre-computed/pre-collected search results as, for example, described by PCT/EP2013/002390.

Although certain products and methods constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

**Claims**

1. A method of handling queries in a database system (1), the database system (1) comprising at least one client (4) and at least one search platform (2), the search platform (2) including a search platform server (2a) and an intermediate element (6) between the at least one client (4) and the search platform server (2a), the search platform server (2a) maintaining pre-computed search results having been pre-computed based on original data in a primary data source (5), the pre-computed search results being associated with confidence factors, wherein a confidence factor indicates a probability of the associated pre-computed search result being valid, valid search results still correspond to the original data in the primary data source (5), the method comprising:

   receiving, at the search platform server (2a), a query (10) from the at least one client (4), the query (10) indicating at least one search criterion;
   in response to receiving the query (10), identifying, at the search platform server (2a), pre-computed search results corresponding to the at least one search criterion;
   returning, from the search platform server (2a) to the intermediate element (6), the identified pre-computed search results corresponding to the at least one search criterion;
   evaluating, at the intermediate element (6), the confidence factors of the identified pre-computed search results received from the search platform server (2a);
   validating, at the intermediate element (6), the identified pre-computed search results, which are associated with confidence factors having values not exceeding a given threshold, with the primary data source (5);
   returning, from the intermediate element (6) to the at least one client (4), the identified pre-computed search results which are associated with confidence factors having values exceeding the given threshold, and validated search results received from the primary data source (5) for the identified pre-computed search results which are associated with confidence factors having values not exceeding the given threshold; and forwarding, from the intermediate element (6) to the search platform server (2a), the validated search results for inclusion in the pre-computed search results,

   wherein:

   only a subset of the identified pre-computed search results, which are associated with confidence factors having values not exceeding the given threshold, are validated with the primary data source (5) in an incremental way while stopping validation after a given period of time; and the validated search results for the subset are returned to the at least one client (4),

   wherein

   the identified pre-computed search results and the validated search results are returned to the at least one client (4) by sending first atomic messages each conveying a single identified pre-computed search result, and second atomic messages each conveying a single validated search result; and
   the first and second atomic messages are sent in an incremental manner.

2. The method of claim 1, wherein the confidence factor values are derived from a probabilistic model modelling a probability of validity of pre-computed search results over time.

3. The method of claim 1 or claim 2, wherein the probability of a pre-computed search result i being valid at a time t after a previous computation of the pre-computed search result i is given by $e^{-\lambda_i t_i}$, wherein $\lambda_i$ denotes a decrease rate of the probability of the pre-computed search result i being valid and $t_i$ denotes a time of since a last re-computation of the pre-computed search result i.

4. The method of claim 3, wherein $e^{-\lambda_i t_i}$ is calculated in response to the query based on a stored value of $\lambda_i$ and a difference between a stored value of a time of the last re-computation of the pre-computed search result i and a current time.

5. The method of claim 3 or claim 4, wherein a value of $\lambda_i$ is derived from past re-computations of the pre-computed search result i.

**6.** The method of any of claims 1 to 5, wherein the threshold is prescribed by the client (4).

**7.** The method of any of claims 1 to 5, wherein the threshold is set autonomously by the search platform (2).

**8.** A search platform (2) within a database system (1), the search platform (2) including a search platform server (2a) and an intermediate element (6) between at least one client (4) and the search platform server (2a), and being arranged to:

maintain, at the search platform server (2a), pre-computed search results having been pre-computed based on original data in a primary data source (5), the pre-computed search results being associated with confidence factors, wherein a confidence factor indicates a probability of the associated search result being valid, valid search results still correspond to the original data in the primary data source (5),

receive, at the search platform server (2a), a query (10) from the at least one client (4), the query (10) indicating at least one search criterion,

in response to receiving the query (10),

identify, at the search platform server (2a), pre-computed search results corresponding to the at least one search criterion;

return, from the search platform server (2a) to the intermediate element (6), the identified pre-computed search results corresponding to the at least one search criterion;

evaluate, at the intermediate element (6), the confidence factors of the identified pre-computed search results received from the search platform server (2a);

validate, at the intermediate element (6), the identified pre-computed search results, which are associated with confidence factors having values not exceeding a given threshold, with the primary data source (5);

return, from the intermediate element (6) to the at least one client (4), only the identified pre-computed search results which are associated with confidence factors having values exceeding the given threshold, and validated search results received from the primary data source (5) for the identified pre-computed search results which are associated with confidence factors having values not exceeding the given threshold; and

forward, from the intermediate element (6) to the search platform server (2a), the validated search results for inclusion in the pre-computed search results,

wherein:

only a subset of the identified pre-computed search results, which are associated with confidence factors having values not exceeding the given threshold, are validated with the primary data source (5) in an incremental way while stopping validation after a given period of time; and the validated search results for the subset are returned to the at least one client (4), and

wherein

the identified pre-computed search results and the validated search results are returned to the at least one client (4) by sending first atomic messages each conveying a single identified pre-computed search result, and second atomic messages each conveying a single validated search result; and the first and second atomic messages are sent in an incremental manner.

**9.** The search platform of claim 8 being arranged to apply the threshold as a further search criterion in addition to the at least one search criterion indicated by the query.

**10.** The search platform of claim 8 or claim 9 being arranged to:

validate pre-computed search results corresponding to the at least one search criterion and being associated with confidence factor values below the threshold with the primary data source (5) returning more valid database query results; return the validated pre-computed search results corresponding to the query to the client (4).

**11.** The search platform of claim 8 or claim 9 being arranged to filter out pre-computed search results complying with the at least one search criterion and being associated with confidence factor values below the threshold.

**12.** A database system (1) comprising at least one client (4) and at least one search platform (2), the search platform (2) including a search platform server (2a) and an intermediate element (6) between the at least one client (4) and the search platform server (2a), the client (4) being arranged to transmit a query (10) indicating at least one search criterion to the search platform server (2a),

the at least one search platform (2) being arranged to

maintain, at the search platform server (2a) pre-computed search results having been pre-computed based on original data in a primary data

**EP 2 908 255 B1**

source (5), the pre-computed search results being associated with confidence factors, wherein a confidence factor indicates a probability of the associated search result being valid, valid search results still correspond to the original data in the primary data source (5);

in response to receiving the query (10),

identify, at the search platform server (2a), pre-computed search results corresponding to the at least one search criterion;

return, from the search platform server (2a) to the intermediate element (6), the identified pre-computed search results corresponding to the at least one search criterion;

evaluate, at the intermediate element (6), the confidence factors of the identified pre-computed search results received from the search platform server (2a);

validate, at the intermediate element (6), the identified pre-computed search results, which are associated with confidence factors having values not exceeding a given threshold, with the primary data source (5);

return, from the intermediate element (6) to the at least one client (4), only the identified pre-computed search results which are associated with confidence factors having values exceeding the given threshold, and validated search results received from the primary data source (5) for the identified pre-computed search results which are associated with confidence factors having values not exceeding the given threshold; and

forward, from the intermediate element (6) to the search platform server (2a), the validated search results for inclusion in the pre-computed search results,

wherein:

only a subset of the identified pre-computed search results, which are associated with confidence factors having values not exceeding the given threshold, are validated with the primary data source (5) in an incremental way while stopping validation after a given period of time; and the validated search results for the subset are returned to the at least one client (4), and

wherein

the identified pre-computed search results and the validated search results are returned to the at least one client (4) by sending first atomic messages each conveying a single identified pre-computed search result, and second atomic messages each conveying a single validated search result; and

the first and second atomic messages are sent in an incremental manner.

13. Non-transitory computer readable storage medium having computer program instructions stored therein, which when executed on a computer system (2) comprising at least one client (4) and at least one search platform (2), the search platform (2) including a search platform server (2a) and an intermediate element (6) between the at least one client (4) and the search platform server (2a), cause the computer system to

maintain, at the search platform server (2a), pre-computed search results having been pre-computed based on original data in a primary data source (5), the pre-computed search results being associated with confidence factors, wherein a confidence factor indicates a probability of the associated search result being valid, valid search results still correspond to the original data in the primary data source (5);

receive, from the at least one client (4) at the search platform server (2a), a query (10) indicating at least one search criterion,

in response to receiving the query (10),

identify, at the search platform server (2a), pre-computed search results corresponding to the at least one search criterion;

return, from the search platform server (2a) to the intermediate element (6), the identified pre-computed search results corresponding to the at least one search criterion;

evaluate, at the intermediate element (6), the confidence factors of the identified pre-computed search results received from the search platform server (2a);

validate, at the intermediate element (6), the identified pre-computed search results, which are associated with confidence factors having values not exceeding a given threshold, with the primary data source (5);

return, from the intermediate element (6) to the at least one client (4), only the identified pre-computed search results which are associated with confidence factors having values exceeding the given threshold, and validated search results received from the primary data source (5) for the identified pre-computed search results which are associated with confidence factors having values not exceeding the given threshold; and

forward, from the intermediate element (6) to the search platform server (2a), the validated search results for inclusion in the pre-computed search results,

wherein:

only a subset of the identified pre-computed search results, which are associated with confidence factors having values not exceeding the given threshold, are validated with the primary data source (5) in an incremental way while stopping validation after a given period of time; and the validated search results for the subset are returned to the at least one client (4), and

wherein

the identified pre-computed search results and the validated search results are returned to the at least one client (4) by sending first atomic messages each conveying a single identified pre-computed search result, and second atomic messages each conveying a single validated search result; and
the first and second atomic messages are sent in an incremental manner.

**Patentansprüche**

1. Verfahren zum Bearbeiten von Abfragen in einem Datenbanksystem (1), wobei das Datenbanksystem (1) wenigstens einen Client (4) und wenigstens eine Suchplattform (2) umfasst, wobei die Suchplattform (2) einen Suchplattform-Server (2a) und ein Zwischenelement (6) zwischen dem wenigstens einen Client (4) und dem Suchplattform-Server (2a) enthält, wobei der Suchplattform-Server (2a) vorberechnete Suchergebnisse hält, welche basierend auf Ursprungsdaten in einer primären Datenquelle (5) vorberechnet wurden, wobei die vorberechneten Suchergebnisse mit Konfidenzfaktoren verknüpft sind, wobei ein Konfidenzfaktor eine Wahrscheinlichkeit angibt, dass das verknüpfte, vorberechnete Suchergebnis gültig ist, wobei gültige Suchergebnisse den Ursprungsdaten in der primären Datenquelle (5) noch entsprechen, wobei das Verfahren umfasst:

Empfangen einer Abfrage (10) von dem wenigstens einen Client (4) an dem Suchplattform-Server (2a), wobei die Abfrage (10) wenigstens ein Suchkriterium angibt;
als Antwort auf Empfangen der Abfrage (10), Identifizieren vorberechneter Suchergebnisse an dem Suchplattform-Server (2a), welche dem wenigstens einen Suchkriterium entsprechen;
Zurückgeben der identifizierten, vorberechneten Suchergebnisse, welche dem wenigstens einen Suchkriterium entsprechen, von dem Suchplattform-Server (2a) an das Zwischenelement (6);
Evaluieren der Konfidenzfaktoren der identifizierten, vorberechneten Suchergebnisse, welche von dem Suchplattform-Server (2a) empfangen wurden, an dem Zwischenelement (6);
Validieren der identifizierten, vorberechneten Suchergebnisse, welche mit Konfidenzfaktoren verknüpft sind, die Werte aufweisen, welche einen gegebenen Schwellwert nicht übersteigen, mit der primären Datenquelle (5) an dem Zwischenelement (6);

Zurückgeben der identifizierten, vorberechneten Suchergebnisse, welche mit Konfidenzfaktoren verknüpft sind, die Werte aufweisen, welche den gegebenen Schwellwert übersteigen, und von der primären Datenquelle (5) empfangene, validierte Suchergebnisse für die identifizierten, vorberechneten Suchergebnisse, welche mit Konfidenzfaktoren verknüpft sind, die Werte aufweisen, welche den gegebenen Schwellwert nicht übersteigen, von dem Zwischenelement (6) an den wenigstens einen Client (4); und
Weiterleiten der validierten Suchergebnisse von dem Zwischenelement (6) an den Suchplattform-Server (2a) zur Aufnahme in die vorberechneten Suchergebnisse,

wobei:

nur eine Untermenge der identifizierten, vorberechneten Suchergebnisse, welche mit Konfidenzfaktoren verknüpft sind, die Werte aufweisen, welche den gegebenen Schwellwert nicht übersteigen, in einer inkrementellen Weise mit der primären Datenquelle (5) validiert werden, wobei die Validierung nach einer gegebenen Zeitspanne beendet wird; und
die validierten Suchergebnisse für die Untermenge an den wenigstens einen Client (4) zurückgegeben werden,

wobei

die identifizierten, vorberechneten Suchergebnisse und die validierten Suchergebnisse an den wenigstens einen Client (4) durch Senden erster atomarer Nachrichten, welche jeweils ein einzelnes identifiziertes, vorberechnetes Suchergebnis tragen, und zweiter atomarer Nachrichten, welche jeweils ein einzelnes validiertes Suchergebnis tragen, zurückgegeben werden; und
die ersten und zweiten atomaren Nachrichten in einer inkrementellen Weise gesendet werden.

2. Verfahren nach Anspruch 1, wobei die Konfidenzfaktor-Werte von einem Wahrscheinlichkeitsmodell abgeleitet werden, welches eine Gültigkeitswahrscheinlichkeit vorberechneter Suchergebnisse über die Zeit modelliert.

3. Verfahren nach Anspruch 1 oder Anspruch 2, wobei die Wahrscheinlichkeit, dass ein vorberechnetes Suchergebnis i zu einem Zeitpunkt t nach einer vorherigen Berechnung des vorberechneten Suchergebnisses i gültig ist, gegeben ist durch $e^{-\lambda_i t_i}$, wobei $\lambda_i$ eine Abnahmerate der Wahrscheinlichkeit, dass das vorberechnete Suchergebnis i gültig ist, bezeichnet

und $t_i$ eine Zeit ab einer letzten Neuberechnung des vorberechneten Suchergebnisses i bezeichnet.

4. Verfahren nach Anspruch 3, wobei $e^{-\lambda_i t_i}$ als Antwort auf die Abfrage basierend auf einem gespeicherten Wert von $\lambda_i$ und einer Differenz zwischen einem gespeicherten Wert einer Zeit von der letzten Neuberechnung des vorberechneten Suchergebnisses i und einer gegenwärtigen Zeit berechnet wird.

5. Verfahren nach Anspruch 3 oder Anspruch 4, wobei ein Wert von $\lambda_i$ aus vorherigen Neuberechnungen des vorberechneten Suchergebnisses i abgeleitet wird.

6. Verfahren nach einem der Ansprüche 1 bis 5, wobei der Schwellwert von dem Client (4) vorgeschrieben wird.

7. Verfahren nach einem der Ansprüche 1 bis 5, wobei der Schwellwert autonom durch die Suchplattform (2) gesetzt wird.

8. Suchplattform (2) in einem Datenbanksystem (1), wobei die Suchplattform (2) einen Suchplattform-Server (2a) und ein Zwischenelement (6) zwischen wenigstens einem Client (4) und dem Suchplattform-Server (2a) enthält und dazu ausgelegt ist:

> vorberechnete Suchergebnisse an dem Suchplattform-Server (2a) zu halten, welche basierend auf Ursprungsdaten in einer primären Datenquelle (5) vorberechnet wurden, wobei die vorberechneten Suchergebnisse mit Konfidenzfaktoren verknüpft sind, wobei ein Konfidenzfaktor eine Wahrscheinlichkeit angibt, dass das verknüpfte Suchergebnis gültig ist, wobei gültige Suchergebnisse den Ursprungsdaten in der primären Datenquelle (5) noch entsprechen, eine Abfrage (10) von dem wenigstens einen Client (4) an dem Suchplattform-Server (2a) zu empfangen, wobei die Abfrage (10) wenigstens ein Suchkriterium angibt, als Antwort auf Empfangen der Abfrage (10), vorberechnete Suchergebnisse an dem Suchplattform-Server (2a) zu identifizieren, welche dem wenigstens einen Suchkriterium entsprechen; die identifizierten, vorberechneten Suchergebnisse, welche dem wenigstens einen Suchkriterium entsprechen, von dem Suchplattform-Server (2a) an das Zwischenelement (6) zurückzugeben; die Konfidenzfaktoren der identifizierten, vorberechneten Suchergebnisse, welche von dem Suchplattform-Server (2a) empfangen wurden, an dem Zwischenelement (6) zu evaluieren; die identifizierten, vorberechneten Suchergebnisse, welche mit Konfidenzfaktoren verknüpft sind, die Werte aufweisen, welche einen gegebenen Schwellwert nicht übersteigen, an dem Zwischenelement (6) mit der primären Datenquelle (5) zu validieren; nur die identifizierten, vorberechneten Suchergebnisse, welche mit Konfidenzfaktoren verknüpft sind, die Werte aufweisen, welche den gegebenen Schwellwert übersteigen, und von der primären Datenquelle (5) empfangene, validierte Suchergebnisse für die identifizierten, vorberechneten Suchergebnisse, welche mit Konfidenzfaktoren verknüpft sind, die Werte aufweisen, welche den gegebenen Schwellwert nicht übersteigen, von dem Zwischenelement (6) an den wenigstens einen Client (4) zurückzugeben; und die validierten Suchergebnisse von dem Zwischenelement (6) an den Suchplattform-Server (2a) zur Aufnahme in die vorberechneten Suchergebnisse weiterzuleiten, wobei:

> nur eine Untermenge der identifizierten, vorberechneten Suchergebnisse, welche mit Konfidenzfaktoren verknüpft sind, die Werte aufweisen, welche den gegebenen Schwellwert nicht übersteigen, in einer inkrementellen Weise mit der primären Datenquelle (5) validiert werden, wobei die Validierung nach einer gegebenen Zeitspanne beendet wird; und die validierten Suchergebnisse für die Untermenge an den wenigstens einen Client (4) zurückgegeben werden, und

wobei

> die identifizierten, vorberechneten Suchergebnisse und die validierten Suchergebnisse an den wenigstens einen Client (4) durch Senden erster atomarer Nachrichten, welche jeweils ein einzelnes identifiziertes, vorberechnetes Suchergebnis tragen, und zweiter atomarer Nachrichten, welche jeweils ein einzelnes validiertes Suchergebnis tragen, zurückgegeben werden; und die ersten und zweiten atomaren Nachrichten in einer inkrementellen Weise gesendet werden.

9. Suchplattform nach Anspruch 8, die dazu ausgelegt ist, den Schwellwert als ein weiteres Suchkriterium zusätzlich zu dem wenigstens einen Suchkriterium, welches durch die Abfrage angegeben ist, anzuwenden.

10. Suchplattform nach Anspruch 8 oder Anspruch 9, die dazu ausgelegt ist:

vorberechnete Suchergebnisse, welche dem wenigstens einen Suchkriterium entsprechen und mit Konfidenzfaktor-Werten unterhalb des Schwellwertes verknüpft sind, mit der primären Datenquelle (5) zu validieren, um mehr gültige Datenbankabfrageergebnisse zurückzugeben; die validierten, vorberechneten Suchergebnisse, welche der Abfrage entsprechen, an den Client (4) zurückzugeben.

11. Suchplattform von Anspruch 8 oder Anspruch 9, die dazu ausgelegt ist, vorberechnete Suchergebnisse, welche dem wenigstens einen Suchkriterium entsprechen und mit Konfidenzfaktor-Werten unterhalb des Schwellwertes verknüpft sind, herauszufiltern.

12. Datenbanksystem (1), umfassend wenigstens einen Client (4) und wenigstens eine Suchplattform (2), wobei die Suchplattform (2) einen Suchplattform-Server (2a) und ein Zwischenelement (6) zwischen dem wenigstens einen Client (4) und dem Suchplattform-Server (2a) enthält, wobei der Client (4) dazu ausgelegt ist, eine Abfrage (10), welche wenigstens ein Suchkriterium angibt, an den Suchplattform-Server (2a) zu übertragen, wobei die wenigstens eine Suchplattform (2) dazu ausgelegt ist,

vorberechnete Suchergebnisse, welche basierend auf Ursprungsdaten in einer primären Datenquelle (5) vorberechnet wurden, an dem Suchplattform-Server (2a) zu halten, wobei die vorberechneten Suchergebnisse mit Konfidenzfaktoren verknüpft sind, wobei ein Konfidenzfaktor eine Wahrscheinlichkeit angibt, dass das verknüpfte Suchergebnis gültig ist, wobei gültige Suchergebnisse den Ursprungsdaten in der primären Datenquelle (5) noch entsprechen; als Antwort auf Empfangen der Abfrage (10), vorberechnete Suchergebnisse, welche dem wenigstens einen Suchkriterium entsprechen, an dem Suchplattform-Server (2a) zu identifizieren; die identifizierten, vorberechneten Suchergebnisse, welche dem wenigstens einen Suchkriterium entsprechen, von dem Suchplattform-Server (2a) an das Zwischenelement (6) zurückzugeben; die Konfidenzfaktoren der identifizierten, vorberechneten Suchergebnisse, welche von dem Suchplattform-Server (2a) empfangen wurden, an dem Zwischenelement (6) zu evaluieren; die identifizierten, vorberechneten Suchergebnisse, welche mit Konfidenzfaktoren verknüpft sind, die Werte aufweisen, welche einen gegebenen Schwellwert nicht übersteigen, an dem Zwischenelement (6) mit der primären Datenquelle (5) zu validieren; nur die identifizierten, vorberechneten Suchergebnisse, welche mit Konfidenzfaktoren verknüpft sind, die Werte aufweisen, welche den gegebenen Schwellwert übersteigen, und von der primären Datenquelle (5) empfangene, validierte Suchergebnisse für die identifizierten, vorberechneten Suchergebnisse, welche mit Konfidenzfaktoren verknüpft sind, die Werte aufweisen, welche den gegebenen Schwellwert nicht übersteigen, von dem Zwischenelement (6) an den wenigstens einen Client (4) zurückzugeben; und

die validierten Suchergebnisse von dem Zwischenelement (6) an den Suchplattform-Server (2a) zur Aufnahme in die vorberechneten Suchergebnisse weiterzuleiten, wobei:

nur eine Untermenge der identifizierten, vorberechneten Suchergebnisse, welche mit Konfidenzfaktoren verknüpft sind, die Werte aufweisen, welche den gegebenen Schwellwert nicht übersteigen, in einer inkrementellen Weise mit der primären Datenquelle (5) validiert werden, wobei die Validierung nach einer gegebenen Zeitspanne beendet wird; und die validierten Suchergebnisse für die Untermenge an den wenigstens einen Client (4) zurückgegeben werden, und

wobei

die identifizierten, vorberechneten Suchergebnisse und die validierten Suchergebnisse an den wenigstens einen Client (4) durch Senden erster atomarer Nachrichten, welche jeweils ein einzelnes identifiziertes, vorberechnetes Suchergebnis tragen, und zweiter atomarer Nachrichten, welche jeweils ein einzelnes validiertes Suchergebnis tragen, zurückgegeben werden; und die ersten und zweiten atomaren Nachrichten in einer inkrementellen Weise gesendet werden.

13. Nichtflüchtiges, computerlesbares Speichermedium, welches darauf gespeicherte Computerprogrammanweisungen aufweist, welche, wenn sie auf einem Computersystem (2) ausgeführt werden, das wenigstens einen Client (4) und wenigstens eine Suchplattform (2) umfasst, wobei die Suchplattform (2) einen Suchplattform-Server (2a) und ein Zwischenelement (6) zwischen dem wenigstens einen Client (4) und dem Suchplattform-Server (2a) enthält, das Computersystem (2) dazu veranlassen, vorberechnete Suchergebnisse an dem Suchplattform-Server (2a) zu halten, welche basierend auf Ursprungsdaten in einer primären Datenquelle (5) vorberechnet wurden, wobei die vorberechneten Suchergebnisse mit Konfidenzfaktoren verknüpft sind, wobei ein Konfidenzfaktor eine Wahrscheinlichkeit angibt, dass das verknüpfte Suchergebnis gültig ist, wobei gültige Suchergebnisse den Ursprungsdaten in der primären Datenquelle (5) noch entsprechen; eine Abfrage (10) von dem wenigstens einen Client (4) an dem Suchplattform-Server (2a) zu empfangen, wobei die Abfrage (10) wenigstens ein Suchkriterium angibt,

als Antwort auf Empfangen der Abfrage (10), vorberechnete Suchergebnisse an dem Suchplattform-Server (2a) zu identifizieren, welche dem wenigstens einen Suchkriterium entsprechen;

die identifizierten, vorberechneten Suchergebnisse, welche dem wenigstens einen Suchkriterium entsprechen, von dem Suchplattform-Server (2a) an das Zwischenelement (6) zurückzugeben;

die Konfidenzfaktoren der identifizierten, vorberechneten Suchergebnisse, welche von dem Suchplattform-Server (2a) empfangen wurden, an dem Zwischenelement (6) zu evaluieren;

die identifizierten, vorberechneten Suchergebnisse, welche mit Konfidenzfaktoren verknüpft sind, die Werte aufweisen, welche einen gegebenen Schwellwert nicht übersteigen, an dem Zwischenelement (6) mit der primären Datenquelle (5) zu validieren;

nur die identifizierten, vorberechneten Suchergebnisse, welche mit Konfidenzfaktoren verknüpft sind, die Werte aufweisen, welche den gegebenen Schwellwert übersteigen, und von der primären Datenquelle (5) empfangene, validierte Suchergebnisse für die identifizierten, vorberechneten Suchergebnisse, welche mit Konfidenzfaktoren verknüpft sind, die Werte aufweisen, welche den gegebenen Schwellwert nicht übersteigen, von dem Zwischenelement (6) an den wenigstens einen Client (4) zurückzugeben; und

die validierten Suchergebnisse von dem Zwischenelement (6) an den Suchplattform-Server (2a) zur Aufnahme in die vorberechneten Suchergebnisse weiterzuleiten,

wobei:

nur eine Untermenge der identifizierten, vorberechneten Suchergebnisse, welche mit Konfidenzfaktoren verknüpft sind, die Werte aufweisen, welche den gegebenen Schwellwert nicht übersteigen, in einer inkrementellen Weise mit der primären Datenquelle (5) validiert werden, wobei die Validierung nach einer gegebenen Zeitspanne beendet wird; und

die validierten Suchergebnisse für die Untermenge an den wenigstens einen Client (4) zurückgegeben werden, und

wobei

die identifizierten, vorberechneten Suchergebnisse und die validierten Suchergebnisse an den wenigstens einen Client (4) durch Senden erster atomarer Nachrichten, welche jeweils ein einzelnes identifiziertes, vorberechnetes Suchergebnis tragen, und zweiter atomarer Nachrichten, welche jeweils ein einzelnes validiertes Suchergebnis tragen, zurückgegeben werden; und

die ersten und zweiten atomaren Nachrichten in einer inkrementellen Weise gesendet werden.

## Revendications

1. Procédé de gestion de requêtes dans un système de base de données (1), le système de base de données (1) comprenant au moins un client (4) et au moins une plateforme de recherche (2), la plateforme de recherche (2) comportant un serveur de plateforme de recherche (2a) et un élément intermédiaire (6) entre l'au moins un client (4) et le serveur de plateforme de recherche (2a), le serveur de plateforme de recherche (2a) conservant des résultats de recherche pré-calculés ayant été pré-calculés d'après des données d'origine dans une source de données primaire (5), les résultats de recherche précalculés étant associés à des facteurs de confiance, dans lequel un facteur de confiance indique une probabilité que le résultat de recherche pré-calculé associé est valide, des résultats de recherche valides correspondent toujours aux données d'origine dans la source de données primaire (5), le procédé comprenant :

la réception, au niveau du serveur de plateforme de recherche (2a), d'une requête (10) provenant de l'au moins un client (4), la requête (10) indiquant au moins un critère de recherche ;
en réponse à la réception de la requête (10), l'identification, au niveau du serveur de plateforme de recherche (2a), de résultats de recherche pré-calculés correspondant à l'au moins un critère de recherche ;
le retour, du serveur de plateforme de recherche (2a) à l'élément intermédiaire (6), des résultats de recherche pré-calculés identifiés correspondant à l'au moins un critère de recherche ;
l'évaluation, au niveau de l'élément intermédiaire (6), des facteurs de confiance des résultats de recherche pré-calculés identifiés reçus en provenance du serveur de plateforme de recherche (2a) ;
la validation, au niveau de l'élément intermédiaire (6), des résultats de recherche pré-calculés identifiés, qui sont associés à des facteurs de confiance ayant des valeurs ne dépassant pas un seuil donné, avec la source de données primaire (5) ;

le retour, de l'élément intermédiaire (6) à l'au moins un client (4), des résultats de recherche pré-calculés identifiés qui sont associés à des facteurs de confiance ayant des valeurs dépassant le seuil donné, et de résultats de recherche validés reçus en provenance de la source de données primaire (5) pour les résultats de recherche pré-calculés identifiés qui sont associés à des facteurs de confiance ayant des valeurs ne dépassant pas le seuil donné ; et

le réacheminement, de l'élément intermédiaire (6) au serveur de plateforme de recherche (2a), des résultats de recherche validés pour une inclusion dans les résultats de recherche pré-calculés,

dans lequel :

uniquement un sous-ensemble des résultats de recherche pré-calculés identifiés, qui sont associés à des facteurs de confiance ayant des valeurs ne dépassant pas le seuil donné, est validé avec la source de données primaire (5) de façon incrémentielle tout en arrêtant la validation après une période de temps donnée ; et

les résultats de recherche validés pour le sous-ensemble sont retournés à l'au moins un client (4),

dans lequel

les résultats de recherche pré-calculés identifiés et les résultats de recherche validés sont retournés à l'au moins un client (4) en envoyant des premiers messages atomiques véhiculant chacun un résultat de recherche pré-calculé identifié unique, et des seconds messages atomiques véhiculant chacun un résultat de recherche validé unique ; et

les premiers et seconds messages atomiques sont envoyés de manière incrémentielle.

2. Procédé selon la revendication 1, dans lequel les valeurs de facteur de confiance sont dérivées d'un modèle probabiliste modélisant une probabilité de validité de résultats de recherche pré-calculés dans le temps.

3. Procédé selon la revendication 1 ou la revendication 2, dans lequel la probabilité qu'un résultat de recherche pré-calculé i est valide à un instant t après un calcul préalable du résultat de recherche pré-calculé i est donnée par $e^{-\lambda_i t_i}$, dans lequel $\lambda_i$ indique un taux de diminution de la probabilité que le résultat de recherche pré-calculé i est valide et $t_i$ indique un temps

depuis un dernier recalcul du résultat de recherche pré-calculé i.

4. Procédé selon la revendication 3, dans lequel $e^{-\lambda_i t_i}$ est calculé en réponse à la requête d'après une valeur stockée de $\lambda_i$ et une différence entre une valeur stockée d'un instant du dernier recalcul du résultat de recherche pré-calculé i et d'un instant actuel.

5. Procédé selon la revendication 3 ou la revendication 4, dans lequel une valeur de $\lambda_i$ est dérivée de recalculs passés du résultat de recherche pré-calculé i.

6. Procédé selon l'une quelconque des revendications 1 à 5, dans lequel le seuil est prescrit par le client (4).

7. Procédé selon l'une quelconque des revendications 1 à 5, dans lequel le seuil est réglé de façon autonome par la plateforme de recherche (2).

8. Plateforme de recherche (2) au sein d'un système de base de données (1), la plateforme de recherche (2) comportant un serveur de plateforme de recherche (2a) et un élément intermédiaire (6) entre au moins un client (4) et le serveur de plateforme de recherche (2a), et étant agencée pour :

conserver, au niveau du serveur de plateforme de recherche (2a), des résultats de recherche pré-calculés ayant été pré-calculés d'après des données d'origine dans une source de données primaire (5), les résultats de recherche pré-calculés étant associés à des facteurs de confiance, dans laquelle un facteur de confiance indique une probabilité que le résultat de recherche associé est valide, des résultats de recherche valides correspondent toujours aux données d'origine dans la source de données primaire (5),

recevoir, au niveau du serveur de plateforme de recherche (2a), une requête (10) provenant de l'au moins un client (4), la requête (10) indiquant l'au moins un critère de recherche,

en réponse à la réception de la requête (10), identifier, au niveau du serveur de plateforme de recherche (2a), des résultats de recherche pré-calculés correspondant à l'au moins un critère de recherche ;

retourner, du serveur de plateforme de recherche (2a) à l'élément intermédiaire (6), les résultats de recherche pré-calculés identifiés correspondant à l'au moins un critère de recherche ;

évaluer, au niveau de l'élément intermédiaire (6), les facteurs de confiance des résultats de recherche pré-calculés identifiés reçus en provenance du serveur de plateforme de recherche (2a) ;

valider, au niveau de l'élément intermédiaire (6), les résultats de recherche pré-calculés identifiés, qui sont associés à des facteurs de confiance ayant des valeurs ne dépassant pas un seuil donné, avec la source de données primaire (5) ;

retourner, de l'élément intermédiaire (6) à l'au moins un client (4), uniquement les résultats de recherche pré-calculés identifiés qui sont associés à des facteurs de confiance ayant des valeurs dépassant le seuil donné, et des résultats de recherche validés reçus en provenance de la source de données primaire (5) pour les résultats de recherche pré-calculés identifiés qui sont associés à des facteurs de confiance ayant des valeurs ne dépassant pas le seuil donné ; et réacheminer, de l'élément intermédiaire (6) au serveur de plateforme de recherche (2a), les résultats de recherche validés pour une inclusion dans les résultats de recherche pré-calculés,

dans laquelle :

uniquement un sous-ensemble des résultats de recherche pré-calculés identifiés, qui sont associés à des facteurs de confiance ayant des valeurs ne dépassant pas le seuil donné, est validé avec la source de données primaire (5) de façon incrémentielle tout en arrêtant la validation après une période de temps donnée ; et les résultats de recherche validés pour le sous-ensemble sont retournés à l'au moins un client (4), et

dans laquelle

les résultats de recherche pré-calculés identifiés et les résultats de recherche validés sont retournés à l'au moins un client (4) en envoyant des premiers messages atomiques véhiculant chacun un résultat de recherche pré-calculé identifié unique, et des seconds messages atomiques véhiculant chacun un résultat de recherche validé unique ; et les premiers et seconds messages atomiques sont envoyés de manière incrémentielle.

9. Plateforme de recherche selon la revendication 8 agencée pour appliquer le seuil en tant que critère de recherche supplémentaire en plus de l'au moins un critère de recherche indiqué par la requête.

10. Plateforme de recherche selon la revendication 8 ou la revendication 9, agencée pour :

valider des résultats de recherche pré-calculés correspondant à l'au moins un critère de recherche et associés à des valeurs de facteur de confiance en dessous du seuil avec la source de données primaire (5) retournant davantage de résultats de requête de base de données valides ;

retourner les résultats de recherche pré-calculés validés correspondant à la requête au client (4).

11. Plateforme de recherche selon la revendication 8 ou la revendication 9, agencée pour éliminer par filtrage des résultats de recherche pré-calculés satisfaisant l'au moins un critère de recherche et associés à des valeurs de facteur de confiance en dessous du seuil.

12. Système de base de données (1) comprenant au moins un client (4) et au moins une plateforme de recherche (2), la plateforme de recherche (2) comportant un serveur de plateforme de recherche (2a) et un élément intermédiaire (6) entre l'au moins un client (4) et le serveur de plateforme de recherche (2a),

le client (4) étant agencé pour transmettre une requête (10) indiquant au moins un critère de recherche au serveur de plateforme de recherche (2a),

l'au moins une plateforme de recherche (2) étant agencée pour

conserver, au niveau du serveur de plateforme de recherche (2a) des résultats de recherche pré-calculés ayant été pré-calculés d'après des données d'origine dans une source de données primaire (5), les résultats de recherche pré-calculés étant associés à des facteurs de confiance, dans lequel un facteur de confiance indique une probabilité que le résultat de recherche associé est valide, des résultats de recherche valides correspondent toujours aux données d'origine dans la source de données primaire (5) ;

en réponse à la réception de la requête (10), identifier, au niveau du serveur de plateforme de recherche (2a), des résultats de recherche pré-calculés correspondant à l'au moins un critère de recherche ;

retourner, du serveur de plateforme de recherche (2a) à l'élément intermédiaire (6), les résultats de recherche pré-calculés identifiés correspondant à l'au moins un critère de recherche ;

évaluer, au niveau de l'élément intermédiaire (6), les facteurs de confiance des résultats de recherche pré-calculés identifiés reçus en provenance du serveur de plateforme de recherche (2a) ;

valider, au niveau de l'élément intermédiaire (6), les résultats de recherche pré-calculés identifiés, qui sont associés à des facteurs de confiance ayant des valeurs ne dépassant pas un seuil donné, avec la source de données primaire (5) ;

retourner, de l'élément intermédiaire (6) à l'au moins un client (4), uniquement les résultats de recherche pré-calculés identifiés qui sont associés à des facteurs de confiance ayant des valeurs dépassant le seuil donné, et des résultats de recherche validés reçus en provenance de la source de données primaire (5) pour les résultats de recherche pré-calculés identifiés qui sont associés à des facteurs de confiance ayant des valeurs ne dépassant pas le seuil donné ; et

réacheminer, de l'élément intermédiaire (6) au serveur de plateforme de recherche (2a), les résultats de recherche validés pour une inclusion dans les résultats de recherche pré-calculés,

dans lequel :

uniquement un sous-ensemble des résultats de recherche pré-calculés identifiés, qui sont associés à des facteurs de confiance ayant des valeurs ne dépassant pas le seuil donné, est validé avec la source de données primaire (5) de manière incrémentielle tout en arrêtant la validation après une période de temps donnée ; et

les résultats de recherche validés pour le sousensemble sont retournés à l'au moins un client (4), et

dans lequel

les résultats de recherche pré-calculés identifiés et les résultats de recherche validés sont retournés à l'au moins un client (4) en envoyant des premiers messages atomiques véhiculant chacun un résultat de recherche pré-calculé identifié unique, et des seconds messages atomiques véhiculant chacun un résultat de recherche validé unique ; et

les premiers et seconds messages atomiques sont envoyés de manière incrémentielle.

13. Support de stockage lisible par ordinateur non transitoire dans lequel sont stockées des instructions de programme d'ordinateur, qui lorsqu'elles sont exécutées sur un système d'ordinateur (2) comprenant au moins un client (4) et au moins une plateforme de recherche (2), la plateforme de recherche (2) comportant un serveur de plateforme de recherche (2a) et un élément intermédiaire (6) entre l'au moins un client (4) et le serveur de plateforme de recherche (2a), amènent le système d'ordinateur à

conserver, au niveau du serveur de plateforme de recherche (2a), des résultats de recherche pré-calculés ayant été pré-calculés d'après des données d'origine dans une source de données primaire (5), les résultats de recherche pré-calculés étant associés à des facteurs de confiance, dans lequel un facteur de confiance indique une probabilité que le résultat de recherche associé est valide, des résultats de recherche valides correspondent toujours aux données d'origine dans la source de données primaire (5),

recevoir, au niveau du serveur de plateforme de recherche (2a), une requête (10) provenant de l'au moins un client (4), la requête (10) indiquant l'au moins un critère de recherche,

en réponse à la réception de la requête (10), identifier, au niveau du serveur de plateforme de recherche (2a), des résultats de recherche pré-calculés correspondant à l'au moins un critère de recherche ;

retourner, du serveur de plateforme de recherche (2a) à l'élément intermédiaire (6), les résultats de recherche pré-calculés identifiés correspondant à l'au moins un critère de recherche ;

évaluer, au niveau de l'élément intermédiaire (6), les facteurs de confiance des résultats de recherche pré-calculés identifiés reçus en provenance du serveur de plateforme de recherche (2a) ;

valider, au niveau de l'élément intermédiaire (6), les résultats de recherche pré-calculés identifiés, qui sont associés à des facteurs de confiance ayant des valeurs ne dépassant pas un seuil donné, avec la source de données primaire (5) ;

retourner, de l'élément intermédiaire (6) à l'au moins un client (4), uniquement les résultats de recherche pré-calculés identifiés qui sont associés à des facteurs de confiance ayant des valeurs dépassant le seuil donné, et des résultats de recherche validés reçus en provenance de la source de données primaire (5) pour les résultats de recherche pré-calculés identifiés qui sont associés à des facteurs de confiance ayant des valeurs ne dépassant pas le seuil donné ; et

réacheminer, de l'élément intermédiaire (6) au serveur de plateforme de recherche (2a), les résultats de recherche validés pour une inclusion dans les résultats de recherche pré-calculés,

dans lequel :

uniquement un sous-ensemble des résultats de recherche pré-calculés identifiés, qui sont associés à des facteurs de confiance ayant des valeurs ne dépassant pas le seuil donné, est validé avec la source de données primaire (5) de façon incrémentielle tout en arrêtant la validation après une période de temps donnée ; et

les résultats de recherche validés pour le sousensemble sont retournés à l'au moins un client (4), et

dans lequel

les résultats de recherche pré-calculés identifiés et les résultats de recherche validés sont retournés à l'au moins un client (4) en envoyant des premiers messages atomiques véhiculant chacun un résultat de recherche pré-calculé identifié unique, et des seconds messages atomiques véhiculant chacun un résultat de recherche validé unique ; et

les premiers et seconds messages atomiques

39 **EP 2 908 255 B1** 40

sont envoyés de manière incrémentielle.

1

Search platform

2

pre-collected
search results
with confidence factors

3

Computation/Collection
platform

4

Client

Fig. 1

**Fig. 2**

Fig. 3

Fig. 4

Fig. 5

Fig. 6

EP 2 908 255 B1

Fig. 7

EP 2 908 255 B1

**Fig. 8**

EP 2 908 255 B1

| Client ~4 | Switch ~6 | server ~2a | primary Data Source |
|---|---|---|---|

Query (criterion A; *criterion B; confidence threshold*)

10

13

Database lookup using search criteria

Return query results including associated confidence factor values

14

Return query results satisfying confidence threshold

15

16

Request valid search results that were below confidence threshold

Return original values of search results that were below confidence threshold

17

Return original values of search results below confidence threshold

t

18

**Fig. 9**

Fig. 10

EP 2 908 255 B1

**Fig. 11**

EP 2 908 255 B1

**Fig. 12**

EP 2 908 255 B1

Fig. 13

Fig. 14

**2**

101
PROCESSOR
INSTRUCTIONS
110

102
MAIN MEMORY
INSTRUCTIONS
110

105
STATIC MEMORY

103
NETWORK INTERFACE DEVICE

112
INSTRUCTIONS
110

INTERNET

104
BUS

107
VIDEO DISPLAY

108
ALPHA-NUMERIC INPUT DEVICE

109
CURSOR CONTROL DEVICE

106
DISK DRIVE UNIT
DATA CARRIER
111
INSTRUCTIONS
110

**Fig. 15**

36

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2013002390 W
- EP 2541473 A1
- US 20090234682 A1
- US 7562027 B1
- WO 2013160721 A1
- EP 2521074 A1